(19) Europäisches Patentamt
European Patent Office
Office européen des brevets

(11) **EP 4 746 331 A1**

(12) **EUROPEAN PATENT APPLICATION**
published in accordance with Art. 153(4) EPC

(43) Date of publication:
**20.05.2026 Bulletin 2026/21**

(21) Application number: **24842242.0**

(22) Date of filing: **09.07.2024**

(51) International Patent Classification (IPC):
**H04L 5/00** (2006.01)

(52) Cooperative Patent Classification (CPC):
**H04L 5/00; H04W 24/10**

(86) International application number:
**PCT/CN2024/104433**

(87) International publication number:
**WO 2025/016247 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 CN 202310868726**

(71) Applicant: **Beijing Unisoc Communications
Technology
Co., Ltd
Beijing 100083 (CN)**

(72) Inventor: **WANG, Hualei
Beijing 100083 (CN)**

(74) Representative: **Tiburzi, Andrea et al
Barzanò & Zanardo Roma S.p.A.
Via Piemonte 26
00187 Roma (IT)**

(54) **CHANNEL STATE INFORMATION REPORT DETERMINATION METHOD AND APPARATUS, TERMINAL DEVICE, AND NETWORK DEVICE**

(57) The present application discloses a method and apparatus for determining a channel state information report, a terminal device, and a network device, relating to the field of communication technologies. The method comprises: determining a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and the number of ports of the second CSI-RS port is greater than or equal to the number of ports of the first CSI-RS port. It can be seen that, in a network scenario where the network configures CSI-RS resources corresponding to a first CSI-RS port and expects a terminal device to be able to report CSI information of a second CSI-RS port, because the CSI information of the second CSI-RS port may not be determinable, reporting the CSI information of the second CSI-RS port may not be possible.

determining a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and a number of ports of the second CSI-RS port is greater than or equal to a number of ports of the first CSI-RS port — S210

FIG. 2

**Description**

**CROSS-REFERENCE TO RELATED APPLICATIONS**

This claims priority to the Chinese patent application No. 202310868726.6, entitled "Method and Apparatus for Determining Channel State Information Report, Terminal Device, and Network Device", filed on July 14, 2023. The content of the aforementioned prior application is incorporated herein by reference in its entirety.

**TECHNICAL FIELD**

The present application relates to the field of communication technologies, and in particular, to a method and apparatus for determining a channel state information report, a terminal device, and a network device.

**BACKGROUND**

Currently, the standards specified by the 3rd Generation Partnership Project (3GPP) organization have introduced research related to Channel State Information (CSI).
In related research, a network may transmit Channel State Information Reference Signal (CSI-RS) resources. Accordingly, a terminal device can perform channel measurement through the CSI-RS resources to execute corresponding CSI feedback and/or CSI reporting.
However, there currently exist various different network scenarios, and different network scenarios may have different network configurations, network requirements, and network implementations. This leads to the possibility that the CSI information included (carried/borne) in a CSI report may change due to different network scenarios. Therefore, further research is needed regarding the information included in the CSI report.

**SUMMARY**

The present application provides a method and apparatus for determining a channel state information report, a terminal device, and a network device, aiming to determine a CSI report in a network scenario where the network actually configures CSI-RS resources corresponding to a first CSI-RS port and the network expects the terminal device to be able to report CSI information of a second CSI-RS port.
A first aspect provides a method for determining a channel state information report, comprising:

determining a Channel State Information (CSI) report, wherein the CSI report comprises CSI information of a first CSI-RS port configured by a network and/or CSI information of a second CSI-RS port expected by the network;
wherein the CSI information of the second CSI-RS port is determined from channel information corresponding to the first CSI-RS port, and the number of ports of the second CSI-RS port is greater than or equal to the number of ports of the first CSI-RS port.

It can be seen that the present application introduces a network scenario where the network actually configures CSI-RS resources corresponding to a first CSI-RS port, and the network expects the terminal device to be able to report CSI information of a second CSI-RS port.
In the aforementioned network scenario, the terminal device can perform channel measurement based on the CSI-RS resources corresponding to the first CSI-RS port to obtain channel information corresponding to the first CSI-RS port. Then, based on this channel information, it can determine the CSI information of the second CSI-RS port expected by the network, enabling it to report the CSI information of the second CSI-RS port.
Furthermore, the terminal device may be unable to determine the CSI information of the second CSI-RS port based on the channel information corresponding to the first CSI-RS port, potentially preventing it from reporting the CSI information of the second CSI-RS port. In such a case, a fallback mechanism may be adopted to choose to report the CSI information of the first CSI-RS port, or to not report CSI at all, or to not update the CSI report.
Thus, the CSI report comprises the CSI information of the first CSI-RS port and/or the CSI information of the second CSI-RS port, thereby achieving the determination of the CSI report in the aforementioned network scenario.
A second aspect provides an apparatus for determining a channel state information report, comprising:

a determining unit, configured to determine a Channel State Information (CSI) report, wherein the CSI report comprises CSI information of a first CSI-RS port configured by a network and/or CSI information of a second CSI-RS port expected by the network;
wherein the CSI information of the second CSI-RS port is determined from channel measurement information corresponding to the first CSI-RS port, and the number of ports of the second CSI-RS port is greater than or equal to the number of ports of the first CSI-RS port.

A third aspect: the steps involved in the method designed in the first aspect above are applied to or within a terminal device.

A fourth aspect: the steps involved in the method designed in the first aspect above are applied to or within a network device.

A fifth aspect provides a terminal device, comprising a processor, a memory, and a computer program or instructions stored on the memory, wherein the processor executes the computer program or instructions to implement the steps of the method designed in the first aspect above.

A sixth aspect provides a network device, comprising a processor, a memory, and a computer program or instructions stored on the memory, wherein the processor executes the computer program or instructions to implement the steps of the method designed in the first aspect above.

A seventh aspect provides a chip, comprising a processor and a communication interface, wherein the processor executes the steps of the method designed in the first aspect above.

An eighth aspect provides a chip module, comprising a transceiver assembly and a chip, the chip comprising a processor, wherein the processor executes the steps of the method designed in the first aspect above.

A ninth aspect provides a computer-readable storage medium, storing a computer program or instructions, wherein the computer program or instructions, when executed, implement the steps of the method designed in the first aspect above. For example, the computer program or instructions are executed by a processor.

A tenth aspect provides a computer program product, comprising a computer program or instructions, wherein the computer program or instructions, when executed, implement the steps of the method designed in the first aspect above. For example, the computer program or instructions are executed by a processor.

The beneficial effects brought about by the technical solutions of the second to tenth aspects can be referred to in the technical effects brought about by the technical solution of the first aspect, which will not be repeated here.

## BRIEF DESCRIPTION OF THE DRAWINGS

To describe the technical solutions in the embodiments of the present application more clearly, the following briefly introduces the accompanying drawings required for describing the embodiments or the prior art.

FIG. 1 is a schematic structural diagram of a communication system according to an embodiment of the present application;

FIG. 2 is a schematic flowchart of a method for determining a channel state information report according to an embodiment of the present application;

FIG. 3 is a functional block diagram of an apparatus for determining a channel state information report according to an embodiment of the present application;

FIG. 4 is a schematic structural diagram of a terminal device according to an embodiment of the present application;

FIG. 5 is a schematic structural diagram of a network device according to an embodiment of the present application.

## DETAILED DESCRIPTION

It should be understood that terms such as "first" and "second" used in the embodiments of the present application are used to distinguish different objects, not to describe a specific order. Furthermore, the terms "comprise", "include", "have" and any variations thereof are intended to cover non-exclusive inclusion. For example, a process, method, software, product, or device that comprises a series of steps or units is not limited to the listed steps or units, but may optionally also include steps or units not listed, or may optionally also include other steps or units inherent to such process, method, software, product, or device.

The term "embodiment" mentioned in the embodiments of the present application means that a particular feature, structure, or characteristic described in conjunction with the embodiment may be included in at least one embodiment of the present application. The appearance of this phrase in various places in the specification is not necessarily all referring to the same embodiment, nor is it an independent or alternative embodiment that is mutually exclusive with other embodiments. Those skilled in the art will understand explicitly and implicitly that the embodiments described herein may be combined with other embodiments.

The term "and/or" in the embodiments of the present application describes the association relationship of associated objects, indicating that three relationships may exist. For example, A and/or B may indicate the following three cases: A exists alone; both A and B exist; B exists alone. Here, A and B may be singular or plural.

In the embodiments of the present application, the symbol "/" may indicate that the associated objects before and after it have an "or" relationship. Additionally, the symbol "/" may also represent a division sign, i.e., performing division operation. For example, A/B may represent A divided by B.

The term "at least one" or similar expressions in the embodiments of the present application refer to any combination of these items, including a single item or any combination of multiple items. It means one or more, where multiple means two or more. For example, at least one of a, b, or c may indicate the following seven cases: a, b, c, a and b, a and c, b and c, a, b, and c. Here, each of a, b, c can be an element or a set containing one or more elements.

The term "equal to" in the embodiments of the present application can be used in conjunction with "greater than", applicable to the technical solution when used with "greater than", or can be used in conjunction with "less than", applicable to the technical solution when used with "less than". When "equal to" is used with "greater than", it is not used with "less than"; when "equal to" is used with "less than", it is not used with "greater than".

Terms such as "of", "corresponding/relevant", "corresponding", "indicated" involved in the embodiments of the present application may sometimes be used interchangeably.

Terms such as "associated with", "corresponding to", "corresponds to", "is", "'s", "as", "belongs to", "as", "considered as" involved in the embodiments of the present application may sometimes be used interchangeably.

Terms such as "expects", "anticipates", "hopes for" involved in the embodiments of the present application may sometimes be used interchangeably.

The term "connection" in the embodiments of the present application refers to various connection methods such as direct connection or indirect connection, to achieve communication between devices, which is not limited in any way.

The term "network" in the embodiments of the present application may be expressed as the same concept as "system". A communication system is a communication network.

The following describes related content, concepts, meanings, technical problems, technical solutions, and beneficial effects involved in the embodiments of the present application.

**I. Communication System, Terminal Device, and Network Device**

1. Communication System

The technical solutions of the embodiments of the present application may be applied to various communication systems, for example: General Packet Radio Service (GPRS), Long Term Evolution (LTE) system, Advanced Long Term Evolution (LTE-A) system, New Radio (NR) system, evolved system of NR system, LTE-based Access to Unlicensed Spectrum (LTE-U) system, NR-based Access to Unlicensed Spectrum (NR-U) system, Non-Terrestrial Networks (NTN) system, Universal Mobile Telecommunication System (UMTS), Wireless Local Area Networks (WLAN), Wireless Fidelity (Wi-Fi), 6th-Generation (6G) communication system, or other communication systems.

It should be noted that traditional communication systems support a limited number of connections and are easy to implement. However, with the development of communication technologies, communication systems can not only support traditional communication systems, but also support communication such as device-to-device (D2D) communication, machine-to-machine (M2M) communication, machine type communication (MTC), vehicle-to-vehicle (V2V) communication, vehicle-to-everything (V2X) communication, narrow band internet of things (NB-IoT) communication, etc. Therefore, the technical solutions of the embodiments of the present application may also be applied to the aforementioned communication systems.

Furthermore, the technical solutions of the embodiments of the present application may be applied to scenarios such as beamforming, carrier aggregation (CA), dual connectivity (DC), or standalone (SA) deployment.

In the embodiments of the present application, the spectrum used for communication between the terminal device and the network device may be a licensed band or an unlicensed band, which is not limited herein. Additionally, an unlicensed band can be understood as a shared band, and a licensed spectrum can be understood as a non-shared band.

Since the embodiments described herein combine the terminal device and the network device, the involved terminal device and network device will be described in detail below.

2. Terminal Device

A terminal device may be a device with transceiver functionality, also called a terminal, user equipment (UE), remote terminal device, relay device, access terminal device, user unit, user station, mobile station, mobile platform, remote station, mobile device, user terminal device, smart terminal device, wireless communication device, user agent, or user device. It should be noted that a relay device is a terminal device capable of providing relay forwarding services for other terminal devices (including remote terminal devices).

For example, the terminal device may be a mobile phone, a tablet computer (Pad), a computer with wireless transceiver functionality, a virtual reality (VR) terminal device, an augmented reality (AR) terminal device, a wireless terminal device in industrial control, a wireless terminal device in unmanned autonomous driving, a wireless terminal device in remote medical, a wireless terminal device in smart grid, a wireless terminal device in transportation safety, a wireless terminal device in smart city, or a wireless terminal device in smart home, etc.

For another example, the terminal device may also be a cellular phone, a cordless phone, a session initiation protocol (SIP) phone, a wireless local loop (WLL) station, a personal digital assistant (PDA), a handheld device with wireless communication functionality, a computing device, or other processing device connected to a wireless modem, a vehicle-mounted device, a wearable device, a terminal device in a next-generation communication system (e.g., NR communication system, 6G communication system), or a terminal device in a future evolved public land mobile network (PLMN), etc., which is not specifically limited herein.

In some possible implementations, the terminal device may be deployed on land, including indoor or outdoor, handheld, wearable, or vehicle-mounted; it may be deployed on water (e.g., ships, etc.); it may be deployed in the air (e.g., airplanes, balloons, satellites, etc.).

In some possible implementations, the terminal device may include a device with wireless communication functionality, such as a chip system, a chip, or a chip module. For example, the chip system may include a chip, and may also include other discrete components.

In some possible implementations, the terminal device in the embodiments of the present application may be a chip, a chip module, a device, a unit, etc., which is not specifically limited herein.

3. Network Device

A network device may be a device with transceiver functionality, which may be used to communicate with a terminal device.

In some possible implementations, the network device may be responsible for radio resource management (RRM) on the air interface side, quality of service (QoS) management, data compression and encryption, data transmission and reception, etc.

In some possible implementations, the network device may include a base station (BS) in a communication system or a device deployed in a radio access network (RAN) for providing wireless communication functionality, i.e., the network device may include devices in the RAN.

For example, devices in the RAN may include an evolved Node B (eNB or eNodeB) in an LTE communication system, a next generation evolved Node B (ng-eNB) in an NR communication system, a next generation Node B (gNB) in an NR communication system, a master node (MN) in a dual connectivity architecture, a secondary node (SN) in a dual connectivity architecture, etc., which is not specifically limited herein.

In some possible implementations, the network device may include devices in a core network (CN).

For example, devices in the CN may include an Access and Mobility Management Function (AMF), a User Plane Function (UPF), a Session Management Function (SMF), etc.

In some possible implementations, the network device may also be an access point (AP) in a WLAN, a relay station, a communication device in a future evolved PLMN network, a communication device in an NTN network, etc.

In some possible implementations, the network device may include an apparatus having the functionality of providing wireless communication for a terminal device, such as a chip system, a chip, or a chip module. For example, the chip system may include a chip, or may include other discrete components.

In some possible implementations, the network device may be a transmission and reception point (TRP).

In some possible implementations, the network device may communicate with an Internet Protocol (IP) network. For example, the Internet, a private IP network, or other data networks.

In some possible implementations, the network device may include an independent node to implement the aforementioned functions of a base station, or may include two or more independent nodes to implement the aforementioned functions of a base station. For example, the network device includes a centralized unit (CU) and a distributed unit (DU), such as a gNB-CU and a gNB-DU. Furthermore, in some other embodiments of the present application, the network device may also include an active antenna unit (AAU). Among them, the CU implements part of the functions of the network device, and the DU implements another part of the functions of the network device. For example, the CU is responsible for processing non-real-time protocols and services, implementing functions of the Radio Resource Control (RRC) layer, Service Data Adaptation Protocol (SDAP) layer, and Packet Data Convergence Protocol (PDCP) layer. The DU is responsible for processing physical layer protocols and real-time services, implementing functions of the Radio Link Control (RLC) layer, Medium Access Control (MAC) layer, and Physical (PHY) layer. Additionally, the AAU may implement part of the physical layer processing functions, radio frequency processing, and related functions of active antennas. Since information from the RRC layer ultimately becomes information of the PHY layer, or is transformed from information of the PHY layer, in this network deployment, higher-layer signaling (such as RRC signaling) can be considered to be generated by the CU and sent by the DU, or sent jointly by the DU and AAU. It can be understood that the network device may include at least one of CU, DU, and AAU. Furthermore, the CU may be classified as a RAN device, or may also be classified as a core network device, which is not specifically limited herein.

In some possible implementations, the network device may be any site in multiple sites performing coherent joint transmission (CJT) with a terminal device, or other sites outside the multiple sites, or other network devices communicating with the terminal device via the network, which is not specifically limited herein. Among them, multi-site coherent joint transmission may be joint coherent transmission by multiple sites, or different data belonging to the same physical downlink shared channel (PDSCH) being transmitted to the terminal device from different sites, or multiple sites virtually forming one site for transmission. Names with the same meaning specified in other standards are also applicable to the present application, i.e., the present application does not limit the names of these parameters. Sites in multi-site coherent joint transmission may be Remote Radio Heads (RRHs), TRPs, etc., which is not specifically limited herein.

In some possible implementations, the network device may be any site in multiple sites performing non-coherent joint transmission with a terminal device, or other sites outside the multiple sites, or other network devices communicating with the terminal device via the network, which is not specifically limited herein. Among them, multi-site non-coherent joint transmission may be joint non-coherent transmission by multiple sites, or different data belonging to the same PDSCH being transmitted to the terminal device from different sites. Names with the same meaning specified in other standards are also applicable to the present application, i.e., the present application does not limit the names of these parameters. Sites in multi-site non-coherent joint transmission may be RRHs, TRPs, etc., which is not specifically limited herein. The multi-TRP transmission scheme may include an S-DCI based M-TRP transmission scheme, and may also include an M-DCI based M-TRP transmission scheme.

It should be noted that the TRP in the present application is not limited to coherent joint transmission or non-coherent joint transmission scenarios, but may also be applicable to other scenarios, which is not specifically limited herein.

In some possible implementations, the network device may have mobility characteristics, for example, the network device may be a mobile device. Optionally, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station set up on land, water, etc.

In some possible implementations, the network device may provide services for a cell, and terminal devices in this cell may communicate with the network device using transmission resources (e.g., spectrum resources). The cell may be a macro cell, a small cell, a metro cell, a micro cell, a pico cell, a femto cell, etc.

In some possible implementations, the network device in the embodiments of the present application may be a chip, a chip module, a device, a unit, etc., which is not specifically limited herein.

4. Example Description

An example description of the communication system in the embodiments of the present application is given below.

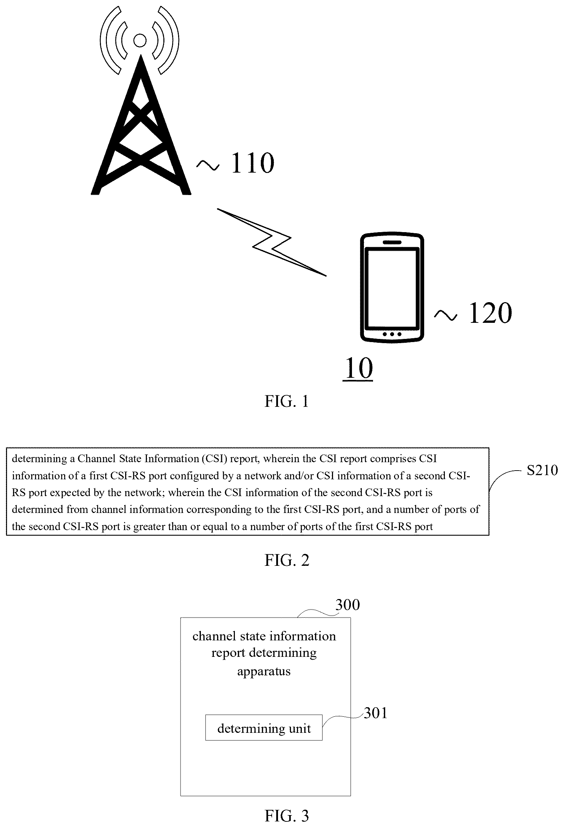

For example, a network architecture of a communication system according to an embodiment of the present application can be referred to in FIG. 1. As shown in FIG. 1, the communication system 10 may include a network device 110 and a terminal device 120. The terminal device 120 can communicate wirelessly with the network device 110.

FIG. 1 is only an example illustration of a network architecture of a communication system and does not constitute a limitation on the network architecture of the communication system in the embodiments of the present application.

For example, the communication system 10 may further include a server or other devices.

For another example, the communication system 10 may include other network devices besides the network device 110.

For another example, the communication system 10 may include other terminal devices besides the terminal device 120.

**II. A Method for Determining a CSI Report**

1. Related Research on CSI

[CSI Configuration]

The standard protocols developed by 3GPP have conducted related research on CSI.

CSI may be channel state information used by a terminal device to feedback downlink channel quality to a network device. That is, the terminal device can feed back downlink channel quality to the network device based on CSI, so that the network device can select an appropriate Modulation and Coding Scheme (MCS) for downlink data transmission, reduce the Block Error Rate (BLER) of downlink data transmission, and perform corresponding processing such as beam management, mobility management, adaptation tracking, rate matching, etc.

Related configuration information for CSI may be defined by the high layer parameter CSI-MeasConfig (CSI measurement configuration). Among them, CSI-MeasConfig may indicate (include/configure/carry) the following two high layer parameters: CSI-ResourceConfig (CSI resource configuration) and CSI-ReportConfig (CSI report configuration).

Additionally, since CSI-ReportConfig indicates (includes) a CSI-ResourceConfigId (CSI resource configuration identifier), through this CSI-ResourceConfigId, CSI-ResourceConfig is associated (corresponds/mapped) to CSI-ReportConfig.

CSI-ReportConfig is used for configuring CSI reporting, i.e., configuring CSI reports.

CSI-ResourceConfig is used for configuring CSI-RS resources for CSI measurement. Additionally, CSI-ResourceConfig can configure CSI Resource Sets, and a CSI Resource Set can contain the most basic CSI-RS resources (e.g., CSI-RS-Resource).

A CSI Resource Set may indicate (include) three types: NZP-CSI-RS-ResourceSet (Non-Zero-Power CSI-RS Resource Set), CSI-IM-ResourceSet (CSI Interference Measurement Resource Set), and CSI-SSB-ResourceSet (SSB Resource Set).

NZP-CSI-RS-ResourceSet may be used for channel measurement and/or interference measurement; CSI-IM-ResourceSet may be used for interference measurement; CSI-SSB-ResourceSet may be used for channel measurement.

The type of CSI-RS resources may be periodic, semi-persistent, or aperiodic.

The report configuration type (reportConfigType) in CSI-ReportConfig may be used to indicate the report type of the CSI report. Among them, the CSI report may be transmitted via a Physical Uplink Control Channel (PUCCH) or a Physical Uplink Shared Channel (PUSCH).

CSI-ResourceConfig and/or NZP-CSI-RS-ResourceSet may configure one or more NZP CSI-RS resource set configurations. Each NZP CSI-RS resource set may consist of K ($K \geq 1$) NZP CSI-RS resources, i.e., each NZP CSI-RS resource set may include at least one NZP CSI-RS resource.

In the embodiments of the present application, CSI measurement can be understood as measuring the downlink channel through the CSI-RS resources configured by CSI-ResourceConfig.

[CSI Report]

Types of CSI reports may include: periodic CSI report, aperiodic CSI report, semi-persistent CSI report on PUCCH, semi-persistent CSI report on PUSCH.

It should be noted that since a periodic CSI report needs to be reported using PUCCH, the periodic CSI report is carried by PUCCH. Since an aperiodic CSI report needs to be reported using PUSCH, the aperiodic CSI report is carried by PUSCH.

For aperiodic CSI reports and semi-persistent CSI reports on PUSCH, the network device also configures the high layer parameters TriggerState and reportTriggerSize to cooperate with the CSI request field in Downlink Control Information (DCI).

[CSI Information Included in the CSI Report]

A CSI report may include at least one of the following CSI information: Layer 1 Reference Signal Received Power (L1-RSRP), Layer 1 Signal-to-Interference plus Noise Ratio (L1-SINR), CSI-related quantities, etc.

Specifically, CSI-related quantities may include at least one of: CSI-RS Resource Indicator (CRI), SS/PBCH block Resource Indicator (SSBRI), Rank Indicator (RI), Precoding Matrix Indicator (PMI), Channel Quality Indicator (CQI), Layer Indicator (LI), Capability Index, Time-Domain Channel Properties (TDCP), etc.

It should be noted that CRI (or SSBRI) may indicate the CSI-RS (or SSB) resource recommended (or selected) by the terminal device. Among them, one CSI-RS (or SSB) resource may represent one beam or antenna direction.

RI may indicate the number of layers recommended (or selected) by the terminal device, and the number of layers may determine which codebook. Among them, each number of layers corresponds to a codebook, and a codebook consists of one or more codewords. For example, a codebook with layer number 2 or a codebook with layer number 1.

PMI may indicate the index of the codeword within the codebook recommended (or selected) by the terminal device, or quantized precoding information. Among them, one codeword corresponds to one precoding matrix. RI and PMI together may represent the number of layers and precoding matrix recommended by the terminal device.

CQI may indicate the terminal device feeding back to the network device the quality of the current channel. Among them, the terminal device needs to calculate the CQI.

[CSI Reporting Band]

The report frequency configuration information (reportFreqConfiguration) in CSI-ReportConfig is used to indicate the frequency granularity of the CSI report.

The CSI reporting setting configuration (CSI reporting setting configuration) may define a CSI reporting band as a subset of subbands within a bandwidth part (BWP). That is, an active BWP may be divided into multiple subbands, and a subset of these multiple subbands (i.e., some subbands) is defined as the CSI reporting band.

Among them, reportFreqConfiguration may indicate:

csi-ReportingBand as a continuous or non-continuous subset of subbands within a BWP, for which CSI should be reported; Wideband CQI reporting or subband CQI reporting may be configured by a high layer parameter (e.g., cqi-FormatIndicator). When wideband CQI reporting is configured, one wideband CQI is reported for each codeword for the entire CSI reporting band. When subband CQI reporting is configured, one CQI per codeword is reported for each subband in the CSI reporting band.

Wideband PMI reporting or subband PMI reporting may be configured by a high layer parameter (e.g., pmi-FormatIndicator). When wideband PMI reporting is configured, one wideband PMI is reported for the entire CSI reporting band. When subband PMI reporting is configured, except for 2 antenna ports, a single wideband indication is reported for the entire CSI reporting band, and one subband indication is reported for each subband in the CSI reporting band. When subband PMI is configured with 2 antenna ports, one PMI is reported for each subband in the CSI reporting band.

2. The Network Scenario Studied in the Present Application

[Description]

Currently, there are various different network scenarios, and different network scenarios may have different network configurations, network requirements, and network implementations. This leads to the possibility that the information included (carried/borne) in a CSI report may change due to different network scenarios.

In a general network scenario, the network actually configures which CSI port corresponds to CSI-RS resources, and the terminal device performs channel measurement based on the CSI-RS resources corresponding to that CSI port, ultimately reporting the CSI information of that CSI-RS port to the network.

Different from the aforementioned network scenario, the present application introduces the following network scenario:

The network actually configures CSI-RS resources corresponding to CSI-RS port M (M can represent the number of CSI-RS ports) for the terminal device, and the network informs the terminal device that it actually expects/anticipates/hopes the terminal device can report CSI information of CSI-RS port L (L can represent the number of CSI-RS ports, and L≥M). Of course, L can also be less than M.

It can be seen that compared to the general network scenario where only CSI information of CSI-RS port M can be reported, in the network scenario of the present application, since the port number L may be greater than the port number M, for the network, the network only needs to configure/transmit CSI-RS resources with a lower port number to the terminal device, without needing to configure/transmit CSI-RS resources with a higher port number. Ultimately, the network can also obtain CSI information with a higher port number, which is beneficial for reducing network overhead, etc.

However, in the network scenario of the present application, for the terminal device, although the network expects the terminal device to report CSI information of CSI-RS port L, due to differences in terminal device capabilities and actual network environment/network configuration/network requirements where the terminal device is located, there may exist the following two situations:

[First Situation]

In the "first situation", the terminal device can perform channel measurement based on the CSI-RS resources corresponding to port number M configured by the network to obtain channel information corresponding to port number M; then, the terminal device can determine CSI information of port number L based on the channel information corresponding to port number M; finally, the terminal device can report the CSI information of CSI-RS port L expected by the network. At this time, the CSI report may include CSI information of CSI-RS port L.

Of course, the terminal device may also determine CSI information of port number M based on the channel information corresponding to port number M, so that it can report CSI information of port number M and CSI information of port number L to the network. At this time, the CSI report may include CSI information of CSI-RS port M and CSI information of CSI-RS port L.

[Second Situation]

In the "second situation", the terminal device may be unable to determine CSI information of port number L based on the channel information corresponding to port number M, potentially preventing it from reporting the CSI information of CSI-RS port L expected by the network.

Of course, the terminal device may only report CSI information of CSI-RS port M to the network, or not perform CSI reporting, or not need to update the CSI report. At this time, the CSI report may include CSI information of CSI-RS port M, or the CSI report is not reported, or the CSI report includes old/previous CSI information, or the CSI report includes old/previous CSI information of CSI-RS port L, or the CSI report includes old/previous CSI information of CSI-RS port L. Among them, this old/previous CSI information may be calculated by the terminal device in previous communication processes.

For the processes of the above two situations, the network scenario of the present application may involve two mechanisms: "monitoring mechanism" and "fallback mechanism".

[Monitoring Mechanism]

The monitoring mechanism can be understood as solving the problem of "how to judge/monitor whether the CSI information of CSI-RS port L expected by the network can be reported".

For example, the present application may use whether CSI information of CSI-RS port L can be obtained to judge/monitor. Among them, when it is judged that the terminal device can obtain CSI information of CSI-RS port L, this indicates that the terminal device has a high probability of being able to report CSI information of CSI-RS port L; when it is judged that the terminal device cannot obtain CSI information of CSI-RS port L, this indicates that the terminal device has a high probability of being unable to report CSI information of CSI-RS port L.

[Fallback Mechanism]

The fallback mechanism can be understood as solving the problem of "how to handle CSI reporting when CSI information of CSI-RS port L is obtained or cannot be obtained".

For example, if the terminal device obtains CSI information of CSI-RS port L, the terminal device can report CSI information of CSI-RS port L. It may also report CSI information of CSI-RS port M. At this time, the CSI report includes CSI information of CSI-RS port L, and may also include CSI information of CSI-RS port M.

If the terminal device cannot obtain CSI information of CSI-RS port L, the terminal device may fall back to report CSI information of CSI-RS port M, or directly not perform CSI reporting, or not update the CSI report. At this time, the CSI report includes CSI information of CSI-RS port M, or the CSI report is not reported, or the CSI report includes old/previous CSI information, etc.

Combining the above content, the technical solutions, beneficial effects, concepts, etc., involved in the embodiments of the present application are specifically described below.

3. Specific Description

It should be noted that the content in the following sections may be combined and associated with each other, may be parallel to each other, or may be independent of each other, which is not specifically limited herein.

1) Channel Information

[Channel Model]

In a Multiple Input Multiple Output (MIMO) system, for a transmitter with a antennas and a receiver with b antennas, the channel model of the MIMO channel can be expressed as:

$$r = Hs + n_0;$$

Among them, $r$ is the received signal vector after passing through the MIMO channel; s is the transmitted signal vector at the transmitter; $H$ is the b×a order channel matrix for the MIMO channel; $n_0$ is the additive noise vector.

In the precoding method, the transmitter can optimize the spatial characteristics of the transmitted signal vector **s** using a precoding method based on the channel matrix $H$, so that the spatial distribution characteristics of the transmitted signal vector **s** match the channel matrix $H$, thereby effectively reducing dependence on receiver algorithms and simplifying receiver algorithms. Through precoding, system performance can be effectively improved.

Precoding can employ linear or nonlinear methods. Due to reasons such as complexity, linear precoding is generally only considered in current wireless communication systems. After precoding, the channel model of the MIMO signal can be expressed as:

$$\mathbf{r} = \mathbf{H}\mathbf{W}s + \mathbf{n}_0;$$

Among them, *W* is the precoding matrix.

For MU-MIMO systems, the receiver cannot perform channel estimation on signals sent to other devices, so transmitter precoding can effectively suppress multiuser interference. It can be seen that it is beneficial for the system if the transmitter knows the channel matrix and uses appropriate precoding to process it.

Furthermore, in the precoding method, the precoding matrix *W* and the channel matrix *H* jointly determine the equivalent channel matrix (e.g., *HW*), and the equivalent channel matrix determines channel characteristics/features, etc. Additionally, in some cases, the precoding matrix *W* can be derived from the channel matrix *H,* for example, the precoding matrix *W* may be a matrix under some transformation of the channel matrix *H.*

In some possible implementations, the terminal device performs channel measurement/evaluation/detection/estimation through downlink reference signals to obtain the channel matrix *H.* Among them, downlink reference signals may include CSI-RS, Synchronization Signal Block (SSB), or Physical Broadcast Channel Demodulation Reference Signal (PBCH DMRS), etc.

[Processing of Channel Matrix *H*]

The Singular Value Decomposition (SVD) of the channel matrix *H* can be:

$$H = U \sum V^T$$

Among them, $U=[u_1, u_2, ..., u_b]$ is a b×b orthogonal matrix or unitary matrix, i.e., satisfying $U^T U = I$;

$V=[v_1, v_2, ..., v_a]$ is an a×a orthogonal matrix or unitary matrix, i.e., satisfying $V^T V = I$. The column vectors in *V* can be called the right-singular vectors of the channel matrix H;

$\Sigma$ is an a×a diagonal matrix, the elements on the diagonal are the $p=min$(b,a) singular values $\sigma_1, \sigma_2, ..., \sigma_p$ of the channel matrix *H,* arranged in decreasing order, i.e., $\sigma_1 > \sigma_2 > ... > \sigma_p$.

Furthermore, the present application can perform matrix multiplication of the conjugate transpose $H^T$ of the channel matrix and the channel matrix *H* to obtain the a×a square matrix $H^T H$. By performing eigenvalue decomposition on the square matrix $H^T H$, the eigenvalues and eigenvectors exist as follows:

$$\left( H^T H \right) v_i = \lambda_i v_i, i \in [1, a];$$

Among them, $\lambda_i$ represents the eigenvalues of the square matrix $H^T H$; $v_i$ represents the eigenvectors of the square matrix $H^T H$.

From $H = U \Sigma V^T$, it can be obtained that $(H^T H) = V \Sigma^2 V^T$.

Therefore, the eigenvectors of $H^T H$ also represent the column vectors in the aforementioned *V.* That is, all eigenvectors of $H^T H$ can constitute the aforementioned *V*, and the eigenvectors of the square matrix $H^T H$ can be the right-singular vectors of the channel matrix *H.*

[Channel Information]

Channel information can be understood as related information obtained from channel measurement based on CSI-RS resources.

For example, based on the above, channel information may include at least one of: channel matrix *H,* equivalent channel matrix, precoding matrix *W* (the precoding matrix *W* can be derived from the channel matrix *H*), right-singular vectors *V* of the channel matrix *H,* eigenvectors of the square matrix $H^T H$ (eigenvectors of the matrix obtained by multiplying the conjugate transpose $H^T$ of the channel matrix by the channel matrix *H*), at least one vector associated with the channel matrix *H* (e.g., at least one vector of the channel matrix *H* under some transformation), at least one vector associated with the square matrix $H^T H$ (e.g., at least one vector of the channel matrix *H* under some transformation), time-domain information of the channel, channel information in the delay-Doppler domain, frequency-domain characteristic information of the channel, time-domain characteristic information of the channel, etc.

Optionally, channel information may also be understood as related information obtained from channel measurement based on DMRS or SSB.

Of course, the channel information described in the present application is not limited to the above content; any related information obtained from channel measurement based on CSI-RS resources and/or DMRS and/or SSB can belong to channel information.

2) First CSI-RS Port and Second CSI-RS Port

[CSI-RS Port]

CSI-RS port can be understood as the port corresponding to CSI-RS resources. Among them, CSI-RS ports may constitute/associate/correspond to CSI-RS resources.

CSI-RS port can also be understood as the port corresponding to the CSI-RS resources/channel information assumed for CSI calculation/acquisition.

In some possible implementations, the number of CSI-RS ports may be $2N_1N_2$. That is, the total number of ports configured by the CSI-RS resources is $2N_1N_2$. Among them, the coefficient 2 represents two polarization directions, $N_1$ represents the number of ports in the horizontal direction on one polarization direction, $N_2$ represents the number of ports in the vertical direction on one polarization direction, and $N_1N_2$ represents $N_1$ multiplied by $N_2$.

Optionally, the values of $N_1$ and $N_2$ may be configured by the parameter n1-n2 in the high layer parameter CodebookConfig (codebook configuration, or called codebook configuration information element (IE)).

For example, Table 1 shows the configuration of a given number of CSI-RS ports with $(N_1,N_2)$ and $(O_1,O_2)$, where $O_1$ represents the oversampling rate in the horizontal direction and also represents the number of oversampled beams in the horizontal direction on one polarization direction; $O_2$ represents the oversampling rate in the vertical direction and also represents the number of oversampled beams in the vertical direction on one polarization direction.

Table 1

| Number of CSI-RS Ports ($P_{CSI-RS}$) | $(N_1,N_2)$ | $(O_1,O_2)$ |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

Optionally, the number of CSI-RS ports may be 2. Its corresponding codebook information may be configured by the parameter nrOfAntennaPorts in the high layer parameter CodebookConfig.

[CSI Information of CSI-RS Port]

Combining the content in "1) Channel Information" above, channel information corresponding to a CSI-RS port can be understood as channel information obtained from channel measurement based on CSI-RS resources/DMRS/SSB, etc., corresponding to the CSI-RS port.

For example, taking channel information including channel matrix $H$ as an example, the terminal device performs channel measurement based on CSI-RS resources corresponding to CSI-RS port M, thereby obtaining the channel matrix $H$ corresponding to CSI-RS port M.

CSI information of a CSI-RS port can be understood as CSI information determined based/according to the channel information corresponding to the CSI-RS port.

For example, the terminal device can determine CSI information of CSI-RS port M based on the channel matrix $H$ corresponding to CSI-RS port M.

Optionally, CSI information of a CSI-RS port may include at least one of: L1-RSRP, L1-SINR, CRI, SSBRI, RI, PMI, CQI, LI, etc.

[First CSI-RS Port]

For ease of distinction and description, the aforementioned "CSI-RS port M" can be referred to as the "first CSI-RS port" in the present application. That is, the number of ports of the first CSI-RS port is M, and M can be 1, 2, 4, 8, 12, 16, 24, 32, etc.

In other words, the first CSI-RS port can be understood as the port corresponding to the CSI-RS resources configured by the network.

For example, the network can configure CSI-RS resources for the terminal device through the high layer parameter CSI-ResourceConfig, and the network can configure the first CSI-RS port for the terminal device through the parameter n1-n2 in the high layer parameter CodebookConfig. Then, the network will indicate/configure that the CSI-RS resources correspond to/are associated with the first CSI-RS port, thereby implementing that the network configures CSI-RS resources corresponding to the first CSI-RS port.

Combining the content in "[CSI Information of CSI-RS Port]" above, since the network configures CSI-RS resources corresponding to the first CSI-RS port for the terminal device, the terminal device can perform channel measurement based on the CSI-RS resources corresponding to the first CSI-RS port to obtain channel information corresponding to the first CSI-RS port. Then, based on the channel information corresponding to the first CSI-RS port, it can determine CSI information, thereby obtaining the CSI information of the first CSI-RS port.

In other words, channel information corresponding to the first CSI-RS port can be understood as channel information obtained from channel measurement based on CSI-RS resources/DMRS/SSB, etc., corresponding to the first CSI-RS port.

CSI information of the first CSI-RS port can be understood as CSI information determined based/according to the channel information corresponding to the first CSI-RS port.

[Second CSI-RS Port]

For ease of distinction and description, the aforementioned "CSI-RS port L" can be referred to as the "second CSI-RS port" in the present application. That is, the number of ports of the second CSI-RS port is L, L can be 1, 2, 4, 8, 12, 16, 24, 32, etc., and the number of ports of the second CSI-RS port is greater than or equal to the number of ports of the first CSI-RS port.

In other words, the second CSI-RS port can be understood as the port corresponding to the CSI-RS resources expected by the network.

For example, the network informs the terminal device through high layer signaling that it expects the terminal device to report CSI information of the second CSI-RS port.

Of course, the present application does not exclude the case where "the number of ports of the second CSI-RS port is less than the number of ports of the first CSI-RS port". The implementation technical solution is similar to the technical solution where "the number of ports of the second CSI-RS port is greater than or equal to the number of ports of the first CSI-RS port", with the difference possibly being some insufficiency in reducing network overhead.

Different from the content in "[CSI Information of CSI-RS Port]" above, since the network does not actually configure CSI-RS resources corresponding to the second CSI-RS port for the terminal device but needs to determine them based on the channel information corresponding to the first CSI-RS port, the CSI information of the second CSI-RS port can be understood as CSI information determined based/according to the channel information corresponding to the first CSI-RS port. How to perform this determination is specifically described below.

3) Determination of CSI Information of the Second CSI-RS Port

Since the network configures CSI-RS resources corresponding to the first CSI-RS port, enabling the terminal device to obtain channel information corresponding to the first CSI-RS port through channel measurement, the terminal device can determine CSI information of the second CSI-RS port based on the channel information corresponding to the first CSI-RS port, thereby achieving the acquisition of CSI information of the CSI-RS port expected by the network.

For example, taking channel information as channel matrix $H$, the terminal device can determine CSI information of the second CSI-RS port based on the channel matrix $H$ corresponding to the first CSI-RS port.

In some possible implementations, the present application may utilize Artificial Intelligence (AI) or Machine Learning (ML) to perform CSI calculation on the channel information corresponding to the first CSI-RS port to obtain CSI information of the second CSI-RS port.

In other words, the CSI information of the second CSI-RS port may be obtained by performing CSI calculation using AI or ML on the channel information corresponding to the first CSI-RS port.

In this way, since AI or ML can provide relatively accurate prediction results, using AI or ML for CSI calculation is beneficial for ensuring that the obtained CSI information of the second CSI-RS port has high accuracy and is also beneficial for reducing air interface overhead, etc.

In some possible implementations, the present application may determine CSI information of the second CSI-RS port based on a preset threshold and the channel information corresponding to the first CSI-RS port.

In other words, the CSI information of the second CSI-RS port may be determined from the channel information corresponding to the first CSI-RS port and a preset threshold.

Among them, the preset threshold may be used to determine an enablement state of AI or ML for CSI calculation, may be used to represent a threshold for frequency-domain related information, and the frequency-domain related information may be used to describe the properties of the channel in the frequency domain. Descriptions of "preset threshold", "CSI calculation enablement state", and "frequency-domain related information" will be specifically explained below.

For example, if an actual measurement value of the frequency-domain related information is greater than or equal to the preset threshold, the CSI information of the second CSI-RS port may be obtained by performing CSI calculation using AI or ML on the channel information corresponding to the first CSI-RS port.

For another example, if an actual measurement value of the frequency-domain related information is less than or equal to the preset threshold, the CSI information of the second CSI-RS port may be obtained by performing CSI calculation using methods other than AI or ML on the channel information corresponding to the first CSI-RS port; or, the CSI information of the second CSI-RS port may be obtained by performing CSI calculation based on old/previous CSI information of the second CSI-RS port and/or the channel information corresponding to the first CSI-RS port, which is not specifically limited herein.

The following describes "AI or ML".

[AI or ML]

AI technology or ML technology can solve problems that are difficult to solve with traditional modeling methods, such as some nonlinear problems, problems with overly complex parameters, etc., by training on large amounts of data to establish solution patterns for some problems and provide relatively accurate prediction results. Among them, AI may include machine learning (ML), deep learning (DL), etc., and AI or ML may include various linear and nonlinear network models, etc., such as linear regression, support vector machines, convolutional neural networks (CNN), deep neural networks (DNN), etc.

With the continuous development of AI technology or ML technology and the continuous evolution of wireless communication systems, 3GPP is currently discussing the integration of AI technology or ML technology with wireless communication technology. In the integration of AI technology or ML technology with wireless communication technology, the present application can introduce AI technology or ML technology at the CSI level, using AI or ML for CSI calculation, in order to improve air interface performance and reduce air interface overhead, etc.

It should be noted that "AI or ML" described in the present application can be understood as an AI model/ML model, an AI algorithm/ML algorithm, AI/ML-based operations or processing, etc., which is not specifically limited herein.

Optionally, AI or ML may have certain model parameters and model architecture, etc.

Optionally, AI or ML may include various linear and nonlinear network models, etc., such as linear regression, support vector machines, CNN, DNN, etc.

[CSI Calculation Enablement State of AI or ML]

Since CSI calculation using AI or ML requires occupying a certain amount of computing power of the terminal device, but the computing power capability of some terminal devices is limited, or they cannot provide computing power for AI or ML at all, this leads to some terminal devices being able to support CSI calculation using AI or ML, while other terminal devices may not be able to support CSI calculation using AI or ML.

Meanwhile, even among terminal devices that originally support CSI calculation using AI or ML, factors such as low remaining battery power of the terminal device, network not supporting the use of AI or ML, poor accuracy of AI or ML calculation results, temporary limitation of terminal device computing power, etc., may make AI or ML no longer suitable for CSI calculation.

In summary, AI or ML may be characterized/represented/described by a CSI calculation enablement state. This CSI calculation enablement state may be used to indicate that AI or ML cannot be used for/participate in CSI calculation, AI or ML can be used for/participate in CSI calculation, AI or ML CSI calculation is disabled, AI or ML CSI calculation is enabled, etc.

Among them, AI or ML CSI calculation disabled can be understood as AI or ML cannot be used for/participate in CSI calculation; AI or ML CSI calculation enabled can be understood as AI or ML can be used for/participate in CSI calculation.

In this way, through the CSI calculation enablement state of AI or ML, it can effectively reflect whether the terminal device can perform CSI calculation using AI or ML.

In some possible implementations, the terminal device may report the CSI calculation enablement state of AI or ML to the network, enabling the network to know the CSI calculation enablement state of AI or ML for the terminal device, so that the network can perform adaptive scheduling and configuration for the terminal device based on the CSI calculation enablement state of AI or ML, improving communication stability. Optionally, reporting the CSI calculation enablement state of AI or ML to the network may be performed in an explicit manner or an implicit manner, which is not specifically limited herein.

For example, in an explicit manner, the terminal device may send signaling/information to the network, and this signaling/information may be used to indicate the CSI calculation enablement state of AI or ML.

For another example, in an implicit manner, since the network has already informed the terminal device that it expects CSI information of the second CSI-RS port, if the CSI report reported by the terminal device does not include CSI information of the second CSI-RS port, after the network obtains this CSI report, the network can also learn that AI or ML CSI calculation is disabled or cannot be used for CSI calculation; or, if the terminal device chooses not to perform CSI reporting, the network will know that AI or ML CSI calculation is disabled or cannot be used for CSI calculation when it does not receive a CSI report after a preset time; or, if the CSI report reported by the terminal device includes old/previous CSI information, after the network obtains this CSI report, the network can also learn that AI or ML CSI calculation is disabled or cannot be used for CSI calculation.

In some possible implementations, the terminal device may not report the CSI calculation enablement state of AI or ML to the network. This is because, for the terminal device, the terminal device can decide the CSI calculation enablement state of AI or ML according to its own implementation, and then determine whether it can obtain CSI information of the second CSI-RS port accordingly. For the network, the network only cares about whether the terminal device can report the CSI information of the second CSI-RS port that it expects, and is not concerned about the CSI calculation enablement state of AI or ML. Therefore, the terminal device may not need to report the CSI calculation enablement state of AI or ML.

Of course, it is also beneficial for the network to know the CSI calculation enablement state of AI or ML, so that the network can perform more adaptive scheduling/configuration for the terminal device based on the CSI calculation enablement state of AI or ML. For example, when the network learns that AI or ML CSI calculation is disabled, if the network still wants to obtain CSI information of the second CSI-RS port, the network needs to configure CSI-RS resources corresponding to the second CSI-RS port for the terminal device.

4) Monitoring Mechanism

[Description]

In the monitoring mechanism, the present application needs to solve the problem of "how to judge/monitor whether the CSI information of the second CSI-RS port expected by the network can be reported".

In specific implementation, the present application can judge/monitor whether the CSI information of the second CSI-RS port expected by the network can be reported by whether the terminal device can obtain the CSI information of the second CSI-RS port.

For example, if it is judged that the terminal device can obtain CSI information of the second CSI-RS port, it indicates that the terminal device has a high probability of being able to report CSI information of CSI-RS port L; if it is judged that the terminal device cannot obtain CSI information of the second CSI-RS port, it indicates that the terminal device has a high probability of being unable to report CSI information of CSI-RS port L.

Combining the content in "3) Determination of CSI Information of the Second CSI-RS Port" above, since AI or ML can be used for CSI calculation, when AI or ML CSI calculation is enabled, the terminal device can perform CSI calculation through AI or ML to obtain CSI information of the second CSI-RS port; when AI or ML CSI calculation is disabled, the terminal device may not be able to obtain CSI information of the second CSI-RS port.

It can be seen that the present application can judge/monitor whether the CSI information of the second CSI-RS port expected by the network can be reported based on the CSI calculation enablement state of AI or ML.

[Preset Threshold]

Combining the content in "[CSI Calculation Enablement State of AI or ML]" above, it can be seen that the present application can determine the CSI calculation enablement state of AI or ML based on the device capability of the terminal device, the remaining battery power of the terminal device, whether the network supports the use of AI or ML, whether the results of AI or ML calculation are accurate, whether the computing power of the terminal device is temporarily limited, etc.

For example, since different terminal devices may have different device capabilities, if the device capability of the terminal device includes not supporting AI or ML for CSI calculation, AI or ML CSI calculation is disabled; if the device capability of the terminal device includes supporting AI or ML for CSI calculation, AI or ML CSI calculation is enabled.

For another example, since CSI calculation using AI or ML requires high computing power and accelerates power consumption, if the remaining battery power of the terminal device is very low, AI or ML CSI calculation is disabled; if the remaining battery power of the terminal device is very high, AI or ML CSI calculation is enabled.

For another example, for scenarios where the network does not support AI or ML, in a scenario where the terminal device supports AI or ML but the network device does not support AI or ML, i.e., there are different support capabilities for AI or ML between the terminal device and the network device, if the terminal device uses AI or ML for CSI calculation to obtain CSI information and then reports this CSI information to the network device. Since the network device does not support AI or ML, the network device cannot parse this CSI information, resulting in CSI reporting failure. In this regard, if the network does not support AI or ML, AI or ML CSI calculation is disabled; if the network supports AI or ML, AI or ML CSI calculation is enabled.

For another example, since the results of AI or ML calculation may have low precision/accuracy, using AI or ML for CSI calculation may result in CSI information of the second CSI-RS port having low precision, thereby affecting communication stability. In this regard, if the precision of the results of AI or ML calculation is low, AI or ML CSI calculation is disabled; if the precision of the results of AI or ML calculation is high, AI or ML CSI calculation is enabled.

For another example, if the input distribution and/or output distribution of AI or ML is inconsistent with the input distribution and/or output distribution during AI or ML training, it may affect the precision/accuracy of AI or ML calculation, thereby affecting communication stability. In this regard, if the precision/accuracy of the results of AI or ML calculation is low, AI or ML CSI calculation is disabled; if the precision/accuracy of the results of AI or ML calculation is high, AI or ML CSI calculation is enabled.

For another example, if the communication performance of resource scheduling/transmission, etc., based on the output of AI or ML is poor, AI or ML CSI calculation being disabled may be considered.

In addition to the above methods, the present application may also introduce a "preset threshold". This preset threshold may be used to determine the CSI calculation enablement state of AI or ML, and may be used to represent a threshold for frequency-domain related information. Among them, this frequency-domain related information is used to describe the properties of the channel in the frequency domain.

Since the terminal device can measure the channel (e.g., the channel corresponding to the first CSI-RS port), the terminal device can conveniently and accurately obtain the actual measurement value of the frequency-domain related information. In this way, by introducing a preset threshold, the terminal device can conveniently and accurately determine the CSI calculation enablement state of AI or ML based on the magnitude relationship between the actual measurement value of the frequency-domain related information and the preset threshold, thereby conveniently and accurately obtaining the CSI calculation enablement state of AI or ML, and finally judging whether CSI information of the second CSI-RS port can be reported based on the CSI calculation enablement state of AI or ML.

For example, if the actual measurement value of the frequency-domain related information is less than or equal to the preset threshold, AI or ML cannot be used for CSI calculation or AI or ML CSI calculation is disabled, making it highly probable that CSI information of the second CSI-RS port cannot be obtained. Thus, it is judged through the preset threshold that the terminal device cannot report CSI information of the second CSI-RS port.

If the actual measurement value of the frequency-domain related information is greater than or equal to the preset threshold, AI or ML can be used for CSI calculation or AI or ML CSI calculation is enabled, making it highly probable that CSI information of the second CSI-RS port can be obtained. Thus, it is judged through the preset threshold that the terminal device can report CSI information of the second CSI-RS port.

For another example, if the actual measurement value of the frequency-domain related information is greater than or equal to the preset threshold, AI or ML cannot be used for CSI calculation or AI or ML CSI calculation is disabled, making it highly probable that CSI information of the second CSI-RS port cannot be obtained. Thus, it is judged through the preset threshold that the terminal device cannot report CSI information of the second CSI-RS port.

If the actual measurement value of the frequency-domain related information is less than or equal to the preset threshold, AI or ML can be used for CSI calculation or AI or ML CSI calculation is enabled, making it highly probable that CSI information of the second CSI-RS port can be obtained. Thus, it is judged through the preset threshold that the terminal device can report CSI information of the second CSI-RS port.

In some possible implementations, the preset threshold may be configured by the network, may be pre-configured, may be information reported as part of terminal device capability, etc., which is not specifically limited herein.

In some possible implementations, the frequency-domain related information may include frequency-domain coherence bandwidth. In this way, the terminal device can conveniently and accurately obtain the actual measurement value of the frequency-domain coherence bandwidth through channel measurement.

[Relationship Between CSI Calculation Enablement State of AI or ML and CSI Report]

It should be noted that when AI or ML cannot be used for CSI calculation or AI or ML CSI calculation is disabled, this will cause the terminal device to possibly not obtain CSI information of the second CSI-RS port, preventing the terminal device from reporting CSI information of the second CSI-RS port, i.e., the CSI report does not include CSI information of the second CSI-RS port. Of course, in the "fallback mechanism", the CSI report may include CSI information of the first CSI-RS port.

When AI or ML can be used for CSI calculation or AI or ML CSI calculation is enabled, this will cause the terminal device to obtain CSI information of the second CSI-RS port, enabling the terminal device to report CSI information of the second CSI-RS port, i.e., the CSI report may include CSI information of the second CSI-RS port. Of course, the CSI report may also include CSI information of the first CSI-RS port.

In other words, if AI or ML cannot be used for CSI calculation or AI or ML CSI calculation is disabled, the CSI report may include CSI information of the first CSI-RS port;

If AI or ML can be used for CSI calculation or AI or ML CSI calculation is enabled, the CSI report may include CSI information of the second CSI-RS port, or CSI information of the first CSI-RS port and CSI information of the second CSI-RS port.

In summary, the CSI calculation enablement state of AI or ML is related to the CSI report. In this way, since the CSI calculation enablement state of AI or ML is related to the CSI report, the present application can determine the CSI report based on the CSI calculation enablement state of AI or ML.

[Determining CSI Report Based on Preset Threshold]

It should be noted that, combining the content in "[CSI calculation enablement state of AI or ML is determined based on preset threshold]" and "[Relationship between CSI calculation enablement state of AI or ML and CSI report]" above, the CSI report of the present application can also be determined based on a preset threshold. That is, the CSI report is determined based on a preset threshold, thereby achieving the determination of the CSI report through the preset threshold.

In specific implementation, the terminal device can conveniently and accurately determine the CSI report based on the magnitude relationship between the actual measurement value of the frequency-domain related information and the preset threshold, thereby conveniently and accurately achieving the determination of the CSI report.

For example, if the actual measurement value of the frequency-domain related information is less than the preset threshold, the CSI report includes CSI information of the first CSI-RS port;

If the actual measurement value of the frequency-domain related information is greater than or equal to the preset threshold, the CSI report includes CSI information of the second CSI-RS port, or CSI information of the first CSI-RS port and CSI information of the second CSI-RS port.

5) Fallback Mechanism

[Description]

In the fallback mechanism, the present application needs to solve the problem of "how to handle CSI reporting when CSI information of the second CSI-RS port is obtained or cannot be obtained".

In specific implementation, the present application can report CSI information of the second CSI-RS port when it is obtained, and adopt a fallback method for reporting when it cannot be obtained, or directly not perform CSI reporting.

For example, if the terminal device obtains CSI information of the second CSI-RS port, the terminal device can report CSI information of the second CSI-RS port, and may also report CSI information of the first CSI-RS port. At this time, the CSI report includes CSI information of the second CSI-RS port L, and may also include CSI information of the first CSI-RS port.

If the terminal device cannot obtain CSI information of the second CSI-RS port, the terminal device may fall back to report CSI information of the first CSI-RS port, may also directly not perform CSI reporting, or may not update the CSI report. At this time, the CSI report includes CSI information of the first CSI-RS port, or the CSI report is not reported, or the CSI report includes old/previous CSI information, or the CSI report includes old/previous CSI information of port L, or the CSI report includes old/previous CSI information of CSI-RS port L.

[Composition of CSI Report]

It should be noted that a CSI report may be composed of two parts, namely Part 1 and Part 2. The payload size of Part 1 may be fixed. Part 1 may be used to determine the number of information bits in Part 2, and the entire information of Part 1 needs to be transmitted before Part 2.

Since the size of Part 1 is fixed, and the size of Part 2 is variable and depends on Part 1, the present application can achieve the following:

Place some important information in Part 1. In this way, when Part 2 is discarded, the terminal device can still report important information to the network device as a reference through Part 1, avoiding the loss of important information;
Place some information that determines the size of Part 2 in Part 1. In this way, the network device can use this information to retrieve Part 2, avoiding blind detection of Part 2 and improving retrieval efficiency.

Furthermore, when the terminal device needs to report a CSI report to the network, to ensure that the network can know which CSI-RS port the CSI information included in the CSI report belongs to, the terminal device can indicate the specific CSI-RS port to the network through this CSI report.

To achieve indicating the number of ports of the first CSI-RS port or the number of ports of the second CSI-RS port to the network through the CSI report, since the CSI report is composed of Part 1 and Part 2, and the contents contained in Part 1 and Part 2 are different, the number of ports of the first CSI-RS port or the number of ports of the second CSI-RS port in the present application may be indicated by Part 1 or Part 2, to improve flexibility.

Optionally, when the information used to indicate the number of ports of the first CSI-RS port or the number of ports of the second CSI-RS port is relatively important, or when the network needs to know the number of ports of the first CSI-RS port or the number of ports of the second CSI-RS port first, since important information is placed in Part 1 and Part 1 needs to be transmitted before Part 2, the present application may indicate the number of ports of the first CSI-RS port or the number of ports of the second CSI-RS port by Part 1.

Optionally, when the information used to indicate the number of ports of the first CSI-RS port or the number of ports of the second CSI-RS port is relatively less important, or when the network does not need to know the number of ports of the first CSI-RS port or the number of ports of the second CSI-RS port first, the present application may also indicate the number of ports of the first CSI-RS port or the number of ports of the second CSI-RS port by Part 2.

Optionally, the number of ports of the first CSI-RS port may be indicated by Part 1, and the number of ports of the second CSI-RS port may be indicated by Part 2. In this way, different parts are used to indicate different port numbers.

Optionally, the number of ports of the first CSI-RS port may be indicated by Part 2, and the number of ports of the second CSI-RS port may be indicated by Part 1. In this way, different parts are used to indicate different port numbers.

In some possible implementations, Part 1 or Part 2 may also be used to indicate at least one of SSBRI, RI, CRI, CQI, CQI-related information, PMI.

For example, SSBRI may be indicated by Part 1. This is because SSBRI may be important information/information that determines the size of Part 2/information with a fixed size. Therefore, indicating SSBRI by Part 1 is beneficial for avoiding the loss of important information, or avoiding blind detection of Part 2.

For another example, CRI may be indicated by Part 1. This is because CRI may be important information/information that determines the size of Part 2/information with a fixed size. Therefore, indicating CRI by Part 1 is beneficial for avoiding the loss of important information, or avoiding blind detection of Part 2.

For another example, RI may be indicated by Part 1. This is because RI may be important information/information that determines the size of Part 2/information with a fixed size. Therefore, indicating RI by Part 1 is beneficial for avoiding the loss of important information, or avoiding blind detection of Part 2.

For another example, CQI may be indicated by Part 1. This is because CQI may be important information/information that determines the size of Part 2/information with a fixed size. Therefore, indicating CQI by Part 1 is beneficial for avoiding the loss of important information, or avoiding blind detection of Part 2.

Optionally, LI may be indicated by Part 1. This is because LI can serve as important information or information that determines the size of Part 2. Therefore, indicating LI by Part 1 is beneficial for avoiding the loss of important information, or avoiding blind detection of Part 2.

For another example, PMI may be indicated by Part 2. This is because PMI has characteristics such as non-fixed size and large resource occupation overhead. Therefore, indicating PMI by Part 2 is beneficial for ensuring the transmission of PMI.

[Codebook Subset Restriction]

Codebook subset restriction can be used to restrict candidate codewords corresponding to CSI-RS ports, to reduce the computational complexity of the terminal device.

For example, taking codebook subset restriction as the high layer parameter n1-n2-codebookSubsetRestriction in a Type II codebook as an example, n1-n2-codebookSubsetRestriction can be used to configure the aforementioned $N_1$ and $N_2$ in Table 1. Among them, n1-n2-codebookSubsetRestriction is configured as follows:

```
n1-n2-codebookSubsetRestriction          CHOICE {
                          two-one                    BIT STRING (SIZE (16)),
                          two-two                    BIT STRING (SIZE (43)),
                          four-one                   BIT STRING (SIZE (32)),
                          three-two                  BIT STRING (SIZE (59)),
                          six-one                    BIT STRING (SIZE (48)),
                          four-two                   BIT STRING (SIZE (75)),
                          eight-one                  BIT STRING (SIZE (64)),

               four-three                 BIT STRING (SIZE (107)),
               six-two                    BIT STRING (SIZE (107)),
               twelve-one                 BIT STRING (SIZE (96)),
               four-four                  BIT STRING (SIZE (139)),
               eight-two                  BIT STRING (SIZE (139)),
               sixteen-one                BIT STRING (SIZE (128))
                     }
```

Among them, "two-one" represents $(N_1,N_2)= (2,1)$, "two-two" represents $(N_1,N_2)= (2,2)$, "four-one" represents $(N_1,N_2)= (4,1)$, and the others can be similarly understood. BIT STRING represents the codebook subset restriction.

Based on this, in the network scenario of the present application, the network configures CSI-RS resources corresponding to the first CSI-RS port for the terminal device and expects the terminal device to be able to report CSI information of the second CSI-RS port. To achieve restricting candidate codewords corresponding to the first CSI-RS port and candidate codewords corresponding to the second CSI-RS port, and to reduce the computational complexity of the terminal device, the present application may introduce a "first codebook subset restriction" and a "second codebook subset restriction".

Among them, the number of ports of the first CSI-RS port is the same as the number of ports indicated by the first codebook subset restriction, and the number of ports of the second CSI-RS port is the same as the number of ports indicated by the second codebook subset restriction.

In this way, through the first codebook subset restriction and the second codebook subset restriction, it is possible to restrict candidate codewords corresponding to the first CSI-RS port and candidate codewords corresponding to the second CSI-RS port, to reduce the computational complexity of the terminal device.

In some possible implementations, the first codebook subset restriction and/or the second codebook subset restriction may be dynamically selected by the network from one or more candidate codebook subset restrictions, or may be configured by the network.

Among them, dynamic selection by the network from one or more candidate codebook subset restrictions can be understood as the network selecting from multiple candidate codebook subset restrictions through high layer Radio Resource Control (RRC) signaling and/or Medium Access Control (MAC) signaling and/or MAC Control Element (MAC CE) and/or DCI.

For example, the network sends DCI or MAC signaling to the terminal device, and this DCI or MAC signaling may be used to select the first codebook subset restriction or the second codebook subset restriction from one or more candidate codebook subset restrictions, thereby implementing network configuration of the first codebook subset restriction or the second codebook subset restriction.

In some possible implementations, the first codebook subset restriction and/or the second codebook subset restriction may be pre-configured or default.

For example, by default, the first/last/any one/random one candidate codebook subset restriction among multiple candidate codebook subset restrictions is selected as the first codebook subset restriction or the second codebook subset restriction.

For another example, by default, the candidate codebook subset restriction indicating the smallest number of ports or the candidate codebook subset restriction indicating the largest number of ports among multiple candidate codebook subset restrictions is selected as the first codebook subset restriction or the second codebook subset restriction.

4. An Example Description of a Method for Determining a Channel State Information Report

[Description]

Combining the above content, an example introduction of a method for determining a channel state information report according to an embodiment of the present application is given below. It should be noted that this method may be applied to a terminal device or a network device. Among them, the terminal device may be a chip, a chip module, or a communication module, etc., and the network device may be a chip, a chip module, or a communication module, etc.

As shown in FIG. 2, which is a schematic flowchart of a method for determining a channel state information report according to an embodiment of the present application, it specifically includes the following steps:

S210: Determine a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and the number of ports of the second CSI-RS port is greater than or equal to or less than the number of ports of the first CSI-RS port.

Optionally, the present application may determine the CSI report based on the CSI calculation enablement state of AI or ML.

Optionally, the present application may determine the CSI report based on a preset threshold.

Combining the content in "2) First CSI-RS Port and Second CSI-RS Port" above, the first CSI-RS port configured by the network can be understood as the port corresponding to the CSI-RS resources configured by the network for the first CSI-RS port, or the port corresponding to the CSI-RS resources configured by the network.

Channel information corresponding to the first CSI-RS port can be understood as channel information obtained from channel measurement based on CSI-RS resources/DMRS/SSB, etc., corresponding to the first CSI-RS port.

It should be noted that "first CSI-RS port", "second CSI-RS port", "CSI calculation enablement state of AI or ML", "preset threshold", etc., can be found in the content above and will not be repeated here.

It can be seen that the present application introduces a network scenario where the network actually configures CSI-RS resources corresponding to a first CSI-RS port, and the network expects the terminal device to be able to report CSI information of a second CSI-RS port.

In the aforementioned network scenario, the terminal device can perform channel measurement based on the CSI-RS resources corresponding to the first CSI-RS port to obtain channel information corresponding to the first CSI-RS port. Then, based on this channel information, it can determine the CSI information of the second CSI-RS port expected by the network, enabling it to report the CSI information of the second CSI-RS port.

Furthermore, the terminal device may be unable to determine the CSI information of the second CSI-RS port based on the channel information corresponding to the first CSI-RS port, potentially preventing it from reporting the CSI information of the second CSI-RS port. In such a case, a fallback mechanism may be adopted to choose to report the CSI information of the first CSI-RS port, or to not report CSI at all, or to not update the CSI report.

Thus, the CSI report comprises the CSI information of the first CSI-RS port and/or the CSI information of the second CSI-RS port, thereby achieving the determination of the CSI report in the aforementioned network scenario.

[Some Possible Implementation Modes]

Combining the above content, some possible existing implementation modes are further explained below. For other unmentioned content, please refer to the above content, which will not be repeated here.

In some possible implementations, the CSI information of the second CSI-RS port being determined from the channel information corresponding to the first CSI-RS port includes:

The CSI information of the second CSI-RS port is obtained by performing CSI calculation using AI or ML on the channel information corresponding to the first CSI-RS port.

It should be noted that this can be understood by referring to the content in "3) Determination of CSI Information of the Second CSI-RS Port" above, and will not be repeated here.

In some possible implementations, the CSI information of the second CSI-RS port being determined from the channel information corresponding to the first CSI-RS port includes:

The CSI information of the second CSI-RS port is determined from the channel information corresponding to the first CSI-RS port and a preset threshold.

It should be noted that this can be understood by referring to the content in "3) Determination of CSI Information of the Second CSI-RS Port" above, and will not be repeated here.

In some possible implementations, AI or ML is characterized by a CSI calculation enablement state, the CSI calculation enablement state of AI or ML is determined based on a preset threshold, the preset threshold is used to represent a threshold for frequency-domain related information, and the frequency-domain related information is used to describe the properties of the channel in the frequency domain.

It should be noted that this can be understood by referring to the content in "Preset Threshold" under "4) Monitoring Mechanism" above, and will not be repeated here.

In some possible implementations, the CSI calculation enablement state of AI or ML being determined based on a preset threshold includes:

If the actual measurement value of the frequency-domain related information is less than the preset threshold, AI or ML cannot be used for CSI calculation or the CSI calculation of AI or ML is disabled;

If the actual measurement value of the frequency-domain related information is greater than or equal to the preset threshold, AI or ML can be used for CSI calculation or the CSI calculation of AI or ML is enabled.

It should be noted that this can be understood by referring to the content in "Preset Threshold" under "4) Monitoring Mechanism" above, and will not be repeated here.

In some possible implementations, the CSI calculation enablement state of AI or ML is related to the CSI report.

It should be noted that this can be understood by referring to the content in "Relationship Between CSI Calculation Enablement State of AI or ML and CSI Report" under "4) Monitoring Mechanism" above, and will not be repeated here.

In some possible implementations, the CSI calculation enablement state of AI or ML being related to the CSI report includes:

If AI or ML cannot be used for CSI calculation or the CSI calculation of AI or ML is disabled, the CSI report includes the CSI information of the first CSI-RS port;

If AI or ML can be used for CSI calculation or the CSI calculation of AI or ML is enabled, the CSI report includes the CSI information of the second CSI-RS port, or the CSI information of the first CSI-RS port and the CSI information of the second CSI-RS port.

It should be noted that this can be understood by referring to the content in "Relationship Between CSI Calculation Enablement State of AI or ML and CSI Report" under "4) Monitoring Mechanism" above, and will not be repeated here.

In some possible implementations, the CSI report is determined based on a preset threshold, the preset threshold is used to represent a threshold for frequency-domain related information, and the frequency-domain related information is used to describe the properties of the channel in the frequency domain.

It should be noted that this can be understood by referring to the content in "Determining CSI Report Based on Preset Threshold" under "4) Monitoring Mechanism" above, and will not be repeated here.

In some possible implementations, the CSI report being determined based on a preset threshold includes:

The CSI report is determined based on the magnitude relationship between the preset threshold and the actual measurement value of the frequency-domain related information.

It should be noted that this can be understood by referring to the content in "Determining CSI Report Based on Preset Threshold" under "4) Monitoring Mechanism" above, and will not be repeated here.

In some possible implementations, the CSI report being determined based on the magnitude relationship between the preset threshold and the actual measurement value of the frequency-domain related information includes:

If the actual measurement value of the frequency-domain related information is less than the preset threshold, the CSI report includes the CSI information of the first CSI-RS port;

If the actual measurement value of the frequency-domain related information is greater than or equal to the preset threshold, the CSI report includes the CSI information of the second CSI-RS port, or the CSI information of the first CSI-RS port and the CSI information of the second CSI-RS port.

It should be noted that this can be understood by referring to the content in "Determining CSI Report Based on Preset Threshold" under "4) Monitoring Mechanism" above, and will not be repeated here.

In some possible implementations, the frequency-domain related information includes frequency-domain coherence bandwidth.

It should be noted that this can be understood by referring to the content in "Preset Threshold" under "4) Monitoring Mechanism" above, and will not be repeated here.

In some possible implementations, the number of ports of the first CSI-RS port and/or the number of ports of the second CSI-RS port is indicated by Part 1 of the CSI report.

It should be noted that this can be understood by referring to the content in "Composition of CSI Report" under "5) Fallback Mechanism" above, and will not be repeated here.

In some possible implementations, Part 1 of the CSI report is also used to indicate at least one of Rank Indicator (RI), Channel Quality Indicator (CQI), and CQI-related information.

It should be noted that this can be understood by referring to the content in "Composition of CSI Report" under "5) Fallback Mechanism" above, and will not be repeated here.

In some possible implementations, the number of ports of the first CSI-RS port is the same as the number of ports indicated by a first codebook subset restriction;
The number of ports of the second CSI-RS port is the same as the number of ports indicated by a second codebook subset restriction.

It should be noted that this can be understood by referring to the content in "Codebook Subset Restriction" under "5) Fallback Mechanism" above, and will not be repeated here.

In some possible implementations, the first codebook subset restriction and/or the second codebook subset restriction is dynamically selected by the network from one or more candidate codebook subset restrictions, or is configured by the network, or is pre-configured or default.

Among them, dynamic selection by the network from one or more candidate codebook subset restrictions can be understood as the network selecting from multiple candidate codebook subset restrictions through high layer RRC signaling and/or MAC signaling and/or MAC CE and/or DCI.

It should be noted that this can be understood by referring to the content in "Codebook Subset Restriction" under "5) Fallback Mechanism" above, and will not be repeated here.

III. An Example Description of an Apparatus for Determining a Channel State Information Report

[Description]

The above mainly introduces the solutions of the embodiments of the present application from the perspective of the method side. It can be understood that, in order to implement the above functions, the terminal device or the network device includes corresponding hardware structures and/or software modules for executing each function. Those skilled in the art should easily realize that, in combination with the units and algorithm steps of each example described in the embodiments disclosed herein, the present application can be implemented in hardware or a combination of hardware and computer software. Whether a function is executed by hardware or computer software driving hardware depends on the specific application and design constraints of the technical solution. Those skilled in the art can use different methods to implement the described functions for each specific application, but such implementation should not be considered beyond the scope of the present application.

The embodiments of the present application may divide the terminal device or the network device into functional units according to the above method examples. For example, each functional unit may be divided corresponding to each function, or two or more functions may be integrated into one processing unit. The above integrated unit can be implemented in the form of hardware or in the form of a software program module. It should be noted that the division of units in the embodiments of the present application is schematic, and is only a logical function division. In actual implementation, there may be other division methods.

In the case of using integrated units, FIG. 3 is a functional block diagram of an apparatus for determining a channel state information report according to an embodiment of the present application. Among them, the channel state information report determining apparatus 300 includes a determining unit 301.

In some possible implementations, the determining unit 301 may be a module unit used for processing signals, data, information, etc., which is not specifically limited herein.

In some possible implementations, the channel state information report determining apparatus 300 may further include a storage unit, configured to store computer program code or instructions executed by the channel state information report determining apparatus 300. Among them, the storage unit may be a memory.

In some possible implementations, the channel state information report determining apparatus 300 may be a chip or a chip module.

In some possible implementations, the determining unit 301 may be integrated into other units.

For example, the determining unit 301 may be integrated into a communication unit.

For another example, the determining unit 301 may be integrated into a processing unit.

It should be noted that the communication unit may be a communication interface, a transceiver, a transceiver circuit, etc.

The processing unit may be a processor or a controller, for example, it may be a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. It can implement or execute the various exemplary logical blocks, modules, and circuits described in connection with the disclosure of the present application. The processing unit may also be a combination for implementing computing functions, for example, a combination of one or more microprocessors, a combination of a DSP and a microprocessor, etc.

In some possible implementations, the channel state information report determining apparatus 300 is used to execute any step performed by a terminal device/chip/chip module/network device, etc., in the above method embodiment.

In specific implementation, the determining unit 301 is used to execute any step in the above method embodiment, and when performing actions such as sending, it may optionally call other units to complete the corresponding operations. A detailed description is given below.

The determining unit 301 is configured to determine a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and the number of ports of the second CSI-RS port is greater than or equal to or less than the number of ports of the first CSI-RS port.

It can be seen that the present application introduces a network scenario where the network actually configures CSI-RS resources corresponding to a first CSI-RS port, and the network expects the terminal device to be able to report CSI information of a second CSI-RS port.

In the aforementioned network scenario, the terminal device can perform channel measurement based on the CSI-RS resources corresponding to the first CSI-RS port to obtain channel information corresponding to the first CSI-RS port. Then, based on this channel information, it can determine the CSI information of the second CSI-RS port expected by the network, enabling it to report the CSI information of the second CSI-RS port.

Furthermore, the terminal device may be unable to determine the CSI information of the second CSI-RS port based on the channel information corresponding to the first CSI-RS port, potentially preventing it from reporting the CSI information of the second CSI-RS port. In such a case, a fallback mechanism may be adopted to choose to report the CSI information of the first CSI-RS port, or to not report CSI at all, or to not update the CSI report.

Thus, the CSI report comprises the CSI information of the first CSI-RS port and/or the CSI information of the second CSI-RS port, thereby achieving the determination of the CSI report in the aforementioned network scenario.

It should be noted that the specific implementation of each operation in the embodiment shown in FIG. 3 can be found in the description of the method embodiment shown above, and will not be described in detail here.

[Some Possible Implementation Modes]

Some possible existing implementation modes are described below. Among them, some specific descriptions can be found above and will not be repeated here.

In some possible implementations, the CSI information of the second CSI-RS port being determined from the channel information corresponding to the first CSI-RS port includes:

The CSI information of the second CSI-RS port is obtained by performing CSI calculation using AI or ML on the channel information corresponding to the first CSI-RS port.

It should be noted that this can be understood by referring to the content in "3) Determination of CSI Information of the Second CSI-RS Port" above, and will not be repeated here.

In some possible implementations, the CSI information of the second CSI-RS port being determined from the channel information corresponding to the first CSI-RS port includes:

The CSI information of the second CSI-RS port is determined from the channel information corresponding to the first CSI-RS port and a preset threshold.

It should be noted that this can be understood by referring to the content in "3) Determination of CSI Information of the Second CSI-RS Port" above, and will not be repeated here.

In some possible implementations, AI or ML is characterized by a CSI calculation enablement state, the CSI calculation enablement state of AI or ML is determined based on a preset threshold, the preset threshold is used to represent a threshold for frequency-domain related information, and the frequency-domain related information is used to describe the properties of the channel in the frequency domain.

It should be noted that this can be understood by referring to the content in "Preset Threshold" under "4) Monitoring Mechanism" above, and will not be repeated here.

In some possible implementations, the CSI calculation enablement state of AI or ML being determined based on a preset threshold includes:

If the actual measurement value of the frequency-domain related information is less than the preset threshold, AI or ML cannot be used for CSI calculation or the CSI calculation of AI or ML is disabled;

If the actual measurement value of the frequency-domain related information is greater than or equal to the preset threshold, AI or ML can be used for CSI calculation or the CSI calculation of AI or ML is enabled.

It should be noted that this can be understood by referring to the content in "Preset Threshold" under "4) Monitoring Mechanism" above, and will not be repeated here.

In some possible implementations, the CSI calculation enablement state of AI or ML is related to the CSI report.

It should be noted that this can be understood by referring to the content in "Relationship Between CSI Calculation Enablement State of AI or ML and CSI Report" under "4) Monitoring Mechanism" above, and will not be repeated here.

In some possible implementations, the CSI calculation enablement state of AI or ML being related to the CSI report includes:

If AI or ML cannot be used for CSI calculation or the CSI calculation of AI or ML is disabled, the CSI report includes the CSI information of the first CSI-RS port;

If AI or ML can be used for CSI calculation or the CSI calculation of AI or ML is enabled, the CSI report includes the CSI information of the second CSI-RS port, or the CSI information of the first CSI-RS port and the CSI information of the second CSI-RS port.

It should be noted that this can be understood by referring to the content in "Relationship Between CSI Calculation Enablement State of AI or ML and CSI Report" under "4) Monitoring Mechanism" above, and will not be repeated here.

In some possible implementations, the CSI report is determined based on a preset threshold, the preset threshold is used to represent a threshold for frequency-domain related information, and the frequency-domain related information is used to describe the properties of the channel in the frequency domain.

It should be noted that this can be understood by referring to the content in "Determining CSI Report Based on Preset Threshold" under "4) Monitoring Mechanism" above, and will not be repeated here.

In some possible implementations, the CSI report being determined based on a preset threshold includes:
The CSI report is determined based on the magnitude relationship between the preset threshold and the actual measurement value of the frequency-domain related information.

It should be noted that this can be understood by referring to the content in "Determining CSI Report Based on Preset Threshold" under "4) Monitoring Mechanism" above, and will not be repeated here.

In some possible implementations, the CSI report being determined based on the magnitude relationship between the preset threshold and the actual measurement value of the frequency-domain related information includes:
If the actual measurement value of the frequency-domain related information is less than the preset threshold, the CSI report includes the CSI information of the first CSI-RS port;

If the actual measurement value of the frequency-domain related information is greater than or equal to the preset threshold, the CSI report includes the CSI information of the second CSI-RS port, or the CSI information of the first CSI-RS port and the CSI information of the second CSI-RS port.

It should be noted that this can be understood by referring to the content in "Determining CSI Report Based on Preset Threshold" under "4) Monitoring Mechanism" above, and will not be repeated here.

In some possible implementations, the frequency-domain related information includes frequency-domain coherence bandwidth.

It should be noted that this can be understood by referring to the content in "Preset Threshold" under "4) Monitoring Mechanism" above, and will not be repeated here.

In some possible implementations, the number of ports of the first CSI-RS port and/or the number of ports of the second CSI-RS port is indicated by Part 1 of the CSI report.

It should be noted that this can be understood by referring to the content in "Composition of CSI Report" under "5) Fallback Mechanism" above, and will not be repeated here.

In some possible implementations, Part 1 of the CSI report is also used to indicate at least one of Rank Indicator (RI), Channel Quality Indicator (CQI), and CQI-related information.

It should be noted that this can be understood by referring to the content in "Composition of CSI Report" under "5) Fallback Mechanism" above, and will not be repeated here.

In some possible implementations, the number of ports of the first CSI-RS port is the same as the number of ports indicated by a first codebook subset restriction;

The number of ports of the second CSI-RS port is the same as the number of ports indicated by a second codebook subset restriction.

It should be noted that this can be understood by referring to the content in "Codebook Subset Restriction" under "5) Fallback Mechanism" above, and will not be repeated here.

In some possible implementations, the first codebook subset restriction and/or the second codebook subset restriction is dynamically selected by the network from one or more candidate codebook subset restrictions, or is configured by the network, or is pre-configured or default.

It should be noted that this can be understood by referring to the content in "Codebook Subset Restriction" under "5) Fallback Mechanism" above, and will not be repeated here.

V. An Example Description of a Terminal Device

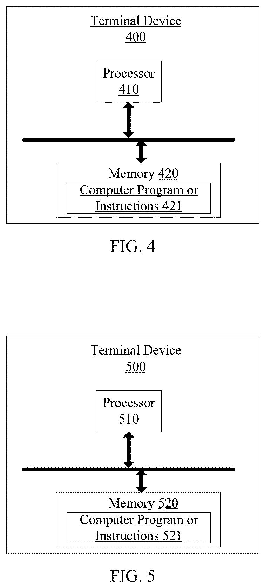

Please refer to FIG. 4, which is a schematic structural diagram of a terminal device according to an embodiment of the present application. Among them, the terminal device 400 may include a processor 410, a memory 420, and a communication bus for connecting the processor 410 and the memory 420.

In some possible implementations, the memory 420 includes but is not limited to Random Access Memory (RAM), Read-Only Memory (ROM), Erasable Programmable Read-Only Memory (EPROM), or Compact Disc Read-Only Memory (CD-ROM). The memory 420 is used to store program code and transmitted data executed by the terminal device 400.

In some possible implementations, the terminal device 400 further includes a communication interface for receiving and transmitting data.

In some possible implementations, the terminal device 400 may be the aforementioned first terminal device.

In some possible implementations, the processor 410 may be one or more CPUs. In the case where the processor 410 is one CPU, this CPU may be a single-core CPU or a multi-core CPU.

In some possible implementations, the processor 410 may be a baseband chip, a chip, a CPU, a general-purpose processor, a DSP, an ASIC, an FPGA, or other programmable logic devices, transistor logic devices, hardware components, or any combination thereof.

In specific implementation, the processor 410 in the terminal device 400 is configured to execute the computer program or instructions 421 stored in the memory 420, performing the following operations:

Determine a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and the number of ports of the second CSI-RS port is greater than or equal to or less than the number of ports of the first CSI-RS port.

It can be seen that the present application introduces a network scenario where the network actually configures CSI-RS resources corresponding to a first CSI-RS port, and the network expects the terminal device to be able to report CSI information of a second CSI-RS port.

In the aforementioned network scenario, the terminal device can perform channel measurement based on the CSI-RS resources corresponding to the first CSI-RS port to obtain channel information corresponding to the first CSI-RS port. Then, based on this channel information, it can determine the CSI information of the second CSI-RS port expected by the network, enabling it to report the CSI information of the second CSI-RS port.

Furthermore, the terminal device may be unable to determine the CSI information of the second CSI-RS port based on the channel information corresponding to the first CSI-RS port, potentially preventing it from reporting the CSI information of the second CSI-RS port. In such a case, a fallback mechanism may be adopted to choose to report the CSI information of the first CSI-RS port, or to not report CSI at all, or to not update the CSI report.

Thus, the CSI report comprises the CSI information of the first CSI-RS port and/or the CSI information of the second CSI-RS port, thereby achieving the determination of the CSI report in the aforementioned network scenario.

It should be noted that the specific implementation of each operation may adopt the corresponding description of the method embodiment shown above, and the terminal device 400 may be used to execute the method embodiment of the present application, which will not be repeated here.

VI. An Example Description of a Network Device

Please refer to FIG. 5, which is a schematic structural diagram of a network device according to an embodiment of the present application. Among them, the network device 500 includes a processor 510, a memory 520, and a communication bus for connecting the processor 510 and the memory 520.

In some possible implementations, the memory 520 includes but is not limited to RAM, ROM, EPROM, or CD-ROM. The memory 520 is used to store related instructions and data.

In some possible implementations, the network device 500 further includes a communication interface for receiving and transmitting data.

In some possible implementations, the processor 510 may be one or more CPUs. In the case where the processor 510 is one CPU, this CPU may be a single-core CPU or a multi-core CPU.

In some possible implementations, the processor 510 may be a baseband chip, a chip, a CPU, a general-purpose processor, a DSP, an ASIC, an FPGA, or other programmable logic devices, transistor logic devices, hardware components, or any combination thereof.

In some possible implementations, the processor 510 in the network device 500 is configured to execute the computer program or instructions 521 stored in the memory 520, performing the following operations:

Determine a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and the number of ports of the second CSI-RS port is greater than or equal to or less than the number of ports of the first CSI-RS port.

It can be seen that the present application introduces a network scenario where the network actually configures CSI-RS resources corresponding to a first CSI-RS port, and the network expects the terminal device to be able to report CSI information of a second CSI-RS port.

In the aforementioned network scenario, the terminal device can perform channel measurement based on the CSI-RS resources corresponding to the first CSI-RS port to obtain channel information corresponding to the first CSI-RS port. Then, based on this channel information, it can determine the CSI information of the second CSI-RS port expected by the network, enabling it to report the CSI information of the second CSI-RS port.

Furthermore, the terminal device may be unable to determine the CSI information of the second CSI-RS port based on the channel information corresponding to the first CSI-RS port, potentially preventing it from reporting the CSI information of the second CSI-RS port. In such a case, a fallback mechanism may be adopted to choose to report the CSI information of the first CSI-RS port, or to not report CSI at all, or to not update the CSI report.

Thus, the CSI report comprises the CSI information of the first CSI-RS port and/or the CSI information of the second CSI-RS port, thereby achieving the determination of the CSI report in the aforementioned network scenario.

It should be noted that the specific implementation of each operation may adopt the corresponding description of the method embodiment shown above, and the network device 500 may be used to execute the method embodiment of the present application, which will not be repeated here.

VII. Other Related Example Descriptions

In some possible implementations, the above method embodiments may be applied to a terminal device or within a terminal device. That is, the execution subject of the above method embodiments may be a terminal device, a chip, a chip module, or a module, etc., which is not specifically limited herein.

In some possible implementations, the above method embodiments may be applied to a network device or within a network device. That is, the execution subject of the above method embodiments may be a network device, a chip, a chip module, or a module, etc., which is not specifically limited herein.

An embodiment of the present application further provides a chip, including a processor, a memory, and a computer program or instructions stored in the memory, wherein the processor executes the computer program or instructions to implement the steps described in the above method embodiments.

An embodiment of the present application further provides a chip module, including a transceiver assembly and a chip, the chip including a processor, a memory, and a computer program or instructions stored in the memory, wherein the processor executes the computer program or instructions to implement the steps described in the above method embodiments.

An embodiment of the present application further provides a computer-readable storage medium, storing a computer program or instructions, wherein the computer program or instructions, when executed, implement the steps described in the above method embodiments.

An embodiment of the present application further provides a computer program product, including a computer program or instructions, wherein the computer program or instructions, when executed, implement the steps described in the above method embodiments.

An embodiment of the present application further provides a communication system, including the aforementioned terminal device and the aforementioned network device.

It should be noted that, for the various embodiments described above, for simplicity of description, they are all described as a series of action combinations. Those skilled in the art should know that the present application is not limited by the described order of actions, as some steps in the embodiments of the present application may be performed in other orders or simultaneously. In addition, those skilled in the art should also understand that the embodiments described in the specification are all preferred embodiments, and the actions, steps, modules, or units involved are not necessarily required by the embodiments of the present application.

In the above embodiments, the description of each embodiment in the present application has its own emphasis. For parts not detailed in a certain embodiment, reference may be made to the relevant description of other embodiments.

The steps of the method or algorithm described in the embodiments of the present application may be implemented in hardware, or may be implemented by a processor executing software instructions. Software instructions may be composed of corresponding software modules, which may be stored in RAM, flash memory, ROM, EPROM, EEPROM, registers, hard disks, removable hard disks, CD-ROM, or any other form of storage medium well known in the art. An exemplary storage medium is coupled to the processor such that the processor can read information from the storage medium and write information to the storage medium. Of course, the storage medium may also be an integral part of the processor. The processor and the storage medium may reside in an ASIC. Additionally, the ASIC may reside in a terminal device or a management device. Of course, the processor and the storage medium may also exist as discrete components in a terminal device or a management device.

Those skilled in the art should realize that in one or more of the above examples, the functions described in the embodiments of the present application may be implemented entirely or partially by software, hardware, firmware, or any combination thereof. When implemented using software, they may be implemented entirely or partially in the form of a computer program product. The computer program product includes one or more computer instructions. When the computer program instructions are loaded and executed on a computer, the processes or functions described in the embodiments of the present application are generated entirely or partially. The computer may be a general-purpose computer, a special-purpose computer, a computer network, or other programmable devices. The computer instructions may be stored in a computer-readable storage medium or transmitted from one computer-readable storage medium to another computer-readable storage medium. For example, the computer instructions may be transmitted from a website, computer, server, or data center to another website, computer, server, or data center via wired (e.g., coaxial cable, fiber optic, digital subscriber line (DSL)) or wireless (e.g., infrared, wireless, microwave) means. The computer-readable storage medium may be any available medium that can be accessed by a computer or a data storage device such as a server or data center integrated with one or more available media. The available medium may be a magnetic medium (e.g., floppy disk, hard disk, magnetic tape), an optical medium (e.g., DVD), or a semiconductor medium (e.g., solid-state drive (SSD)), etc.

The various apparatuses and products described in the above embodiments contain various modules/units, which may be software modules/units, or hardware modules/units, or may be partly software modules/units and partly hardware modules/units. For example, for apparatuses and products applied to or integrated into chips, the modules/units they contain may all be implemented in hardware such as circuits, or at least some modules/units may be implemented in the form of software programs. The software programs run on a processor integrated inside the chip, and the remaining (if any) part of the modules/units may be implemented in hardware such as circuits; for apparatuses and products applied to or integrated into chip modules, the modules/units they contain may all be implemented in hardware such as circuits. Different modules/units may be located in the same component (e.g., chip, circuit module, etc.) or different components of the chip module, or at least some modules/units may be implemented in the form of software programs. The software programs run on a processor integrated inside the chip module, and the remaining (if any) part of the modules/units may be implemented in hardware such as circuits; for apparatuses and products applied to or integrated into terminal devices, the modules/units they contain may all be implemented in hardware such as circuits. Different modules/units may be located in the same component (e.g., chip, circuit module, etc.) or different components of the terminal device, or at least some modules/units may be implemented in the form of software programs. The software programs run on a processor integrated inside the terminal device, and the remaining (if any) part of the modules/units may be implemented in hardware such as circuits.

The specific implementations described above further describe the objectives, technical solutions, and beneficial effects of the embodiments of the present application in detail. It should be understood that the above descriptions are only specific implementations of the embodiments of the present application and are not intended to limit the protection scope of the embodiments of the present application. Any modifications, equivalent replacements, improvements, etc., made on the basis of the technical solutions of the embodiments of the present application shall be included within the protection scope of the embodiments of the present application.

**Claims**

1. A method for determining a channel state information report, comprising:

   determining a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and a number of ports of the second CSI-RS port is greater than or equal to a number of ports of the first CSI-RS port.

2. The method according to claim 1, wherein the CSI information of the second CSI-RS port being determined from the channel information corresponding to the first CSI-RS port comprises:
   the CSI information of the second CSI-RS port is obtained by performing CSI calculation using Artificial Intelligence (AI) or Machine Learning (ML) on the channel information corresponding to the first CSI-RS port.

3. The method according to claim 2, wherein the AI or ML is **characterized by** a CSI calculation enablement state, the CSI calculation enablement state of the AI or ML is determined based on a preset threshold, the preset threshold is used to represent a threshold for frequency-domain related information, and the frequency-domain related information is used to describe properties of a channel in a frequency domain.

4. The method according to claim 3, wherein the CSI calculation enablement state of the AI or ML being determined based on the preset threshold comprises:

if an actual measurement value of the frequency-domain related information is less than the preset threshold, the AI or ML cannot be used for CSI calculation or the CSI calculation of the AI or ML is disabled;
if the actual measurement value of the frequency-domain related information is greater than or equal to the preset threshold, the AI or ML can be used for CSI calculation or the CSI calculation of the AI or ML is enabled.

5. The method according to claim 3, wherein the CSI calculation enablement state of the AI or ML is related to the CSI report.

6. The method according to claim 5, wherein the CSI calculation enablement state of the AI or ML being related to the CSI report comprises:

if the AI or ML cannot be used for CSI calculation or the CSI calculation of the AI or ML is disabled, the CSI report comprises the CSI information of the first CSI-RS port;
if the AI or ML can be used for CSI calculation or the CSI calculation of the AI or ML is enabled, the CSI report comprises the CSI information of the second CSI-RS port, or the CSI information of the first CSI-RS port and the CSI information of the second CSI-RS port.

7. The method according to claim 1, wherein the CSI report is determined based on a preset threshold, the preset threshold is used to represent a threshold for frequency-domain related information, and the frequency-domain related information is used to describe properties of a channel in a frequency domain.

8. The method according to claim 7, wherein the CSI report being determined based on the preset threshold comprises: the CSI report is determined based on a magnitude relationship between the preset threshold and an actual measurement value of the frequency-domain related information.

9. The method according to claim 8, wherein the CSI report being determined based on the magnitude relationship between the preset threshold and the actual measurement value of the frequency-domain related information comprises:

if the actual measurement value of the frequency-domain related information is less than the preset threshold, the CSI report comprises the CSI information of the first CSI-RS port;
if the actual measurement value of the frequency-domain related information is greater than or equal to the preset threshold, the CSI report comprises the CSI information of the second CSI-RS port, or the CSI information of the first CSI-RS port and the CSI information of the second CSI-RS port.

10. The method according to any one of claims 3 to 9, wherein the frequency-domain related information comprises frequency-domain coherence bandwidth.

11. The method according to claim 1, wherein the number of ports of the first CSI-RS port and/or the number of ports of the second CSI-RS port is indicated by Part 1 of the CSI report.

12. The method according to claim 11, wherein Part 1 of the CSI report is further used to indicate at least one of: a Rank Indicator (RI), a Channel Quality Indicator (CQI), and CQI-related information.

13. The method according to claim 1 or claim 11, wherein the number of ports of the first CSI-RS port is the same as a number of ports indicated by a first codebook subset restriction;
the number of ports of the second CSI-RS port is the same as a number of ports indicated by a second codebook subset restriction.

14. The method according to claim 13, wherein the first codebook subset restriction and/or the second codebook subset restriction is dynamically selected by the network from one or more candidate codebook subset restrictions, or is configured by the network, or is pre-configured or default.

15. An apparatus for determining a channel state information report, comprising:

a determining unit, configured to determine a Channel State Information (CSI) report, wherein the CSI report comprises CSI information of a first CSI-RS port configured by a network and/or CSI information of a second CSI-RS port expected by the network;

wherein the CSI information of the second CSI-RS port is determined from channel measurement information corresponding to the first CSI-RS port, and a number of ports of the second CSI-RS port is greater than or equal to a number of ports of the first CSI-RS port.

16. The apparatus according to claim 15, wherein the CSI information of the second CSI-RS port being determined from the channel information corresponding to the first CSI-RS port comprises:

the CSI information of the second CSI-RS port is obtained by performing CSI calculation using Artificial Intelligence (AI) or Machine Learning (ML) on the channel information corresponding to the first CSI-RS port.

17. The apparatus according to claim 16, wherein the AI or ML is **characterized by** a CSI calculation enablement state, the CSI calculation enablement state of the AI or ML is determined based on a preset threshold, the preset threshold is used to represent a threshold for frequency-domain related information, and the frequency-domain related information is used to describe properties of a channel in a frequency domain.

18. The apparatus according to claim 17, wherein the CSI calculation enablement state of the AI or ML being determined based on the preset threshold comprises:

if an actual measurement value of the frequency-domain related information is less than the preset threshold, the AI or ML cannot be used for CSI calculation or the CSI calculation of the AI or ML is disabled;

if the actual measurement value of the frequency-domain related information is greater than or equal to the preset threshold, the AI or ML can be used for CSI calculation or the CSI calculation of the AI or ML is enabled.

19. The apparatus according to claim 17, wherein the CSI calculation enablement state of the AI or ML is related to the CSI report.

20. The apparatus according to claim 19, wherein the CSI calculation enablement state of the AI or ML being related to the CSI report comprises:

if the AI or ML cannot be used for CSI calculation or the CSI calculation of the AI or ML is disabled, the CSI report comprises the CSI information of the first CSI-RS port;

if the AI or ML can be used for CSI calculation or the CSI calculation of the AI or ML is enabled, the CSI report comprises the CSI information of the second CSI-RS port, or the CSI information of the first CSI-RS port and the CSI information of the second CSI-RS port.

21. The apparatus according to claim 15, wherein the CSI report is determined based on a preset threshold, the preset threshold is used to represent a threshold for frequency-domain related information, and the frequency-domain related information is used to describe properties of a channel in a frequency domain.

22. The apparatus according to claim 21, wherein the CSI report being determined based on the preset threshold comprises:

the CSI report is determined based on a magnitude relationship between the preset threshold and an actual measurement value of the frequency-domain related information.

23. The apparatus according to claim 22, wherein the CSI report being determined based on the magnitude relationship between the preset threshold and the actual measurement value of the frequency-domain related information comprises:

if the actual measurement value of the frequency-domain related information is less than the preset threshold, the CSI report comprises the CSI information of the first CSI-RS port;

if the actual measurement value of the frequency-domain related information is greater than or equal to the preset threshold, the CSI report comprises the CSI information of the second CSI-RS port, or the CSI information of the first CSI-RS port and the CSI information of the second CSI-RS port.

24. The apparatus according to any one of claims 17 to 23, wherein the frequency-domain related information comprises frequency-domain coherence bandwidth.

25. The apparatus according to claim 1, wherein the number of ports of the first CSI-RS port and/or the number of ports of the second CSI-RS port is indicated by Part 1 of the CSI report.

26. The apparatus according to claim 25, wherein Part 1 of the CSI report is further used to indicate at least one of: a Rank Indicator (RI), a Channel Quality Indicator (CQI), and CQI-related information.

27. The apparatus according to claim 15 or claim 25, wherein the number of ports of the first CSI-RS port is the same as a number of ports indicated by a first codebook subset restriction;
the number of ports of the second CSI-RS port is the same as a number of ports indicated by a second codebook subset restriction.

28. The apparatus according to claim 27, wherein the first codebook subset restriction and/or the second codebook subset restriction is dynamically selected by the network from one or more candidate codebook subset restrictions, or is configured by the network, or is pre-configured or default.

29. A terminal device, comprising a processor, a memory, and a computer program or instructions stored on the memory, wherein the processor executes the computer program or instructions to implement the steps of the method according to any one of claims 1 to 14.

30. A network device, comprising a processor, a memory, and a computer program or instructions stored on the memory, wherein the processor executes the computer program or instructions to implement the steps of the method according to any one of claims 1 to 14.

31. A chip, comprising a processor and a communication interface, wherein the processor executes the steps of the method according to any one of claims 1 to 14.

32. A computer-readable storage medium, storing a computer program or instructions, wherein the computer program or instructions, when executed, implement the steps of the method according to any one of claims 1 to 14.

FIG. 1

determining a Channel State Information (CSI) report, wherein the CSI report comprises CSI information of a first CSI-RS port configured by a network and/or CSI information of a second CSI-RS port expected by the network; wherein the CSI information of the second CSI-RS port is determined from channel information corresponding to the first CSI-RS port, and a number of ports of the second CSI-RS port is greater than or equal to a number of ports of the first CSI-RS port — S210

FIG. 2

300

channel state information report determining apparatus

determining unit — 301

FIG. 3

Terminal Device
400

Processor
410

Memory 420

Computer Program or
Instructions 421

FIG. 4

Terminal Device
500

Processor
510

Memory 520

Computer Program or
Instructions 521

FIG. 5

## INTERNATIONAL SEARCH REPORT

International application No.

**PCT/CN2024/104433**

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

    IPC: H04L H04W

Documentation searched other than minimum documentation to the extent that such documents are included in the fields searched

Electronic data base consulted during the international search (name of data base and, where practicable, search terms used)

    CNTXT, ENTXT, WPABS, VEN, 3GPP, CNKI: 信道状态信息, 端口, 机器学习, 人工智能, 频域, CSI, ML, AI, port, frequency domain

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114946133 A (NOKIA SHANGHAI BELL CO., LTD. et al.) 26 August 2022 (2022-08-26)<br>description, paragraphs 50-52, 64 and 145-153 | 1-32 |
| X | WO 2023123379 A1 (NEC CORP.) 06 July 2023 (2023-07-06)<br>description, paragraphs 77 and 82 | 1-32 |
| A | WO 2023111752 A1 (LENOVO (SINGAPORE) PTE., LTD.) 22 June 2023 (2023-06-22)<br>entire document | 1-32 |
| A | CN 115514462 A (HUAWEI TECHNOLOGIES CO., LTD.) 23 December 2022 (2022-12-23)<br>entire document | 1-32 |
| A | WO 2023108594 A1 (QUALCOMM INC.) 22 June 2023 (2023-06-22)<br>entire document | 1-32 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 September 2024** | **06 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/104433**

| Patent document cited in search report | | | Publication date (day/month/year) | Patent family member(s) | | | Publication date (day/month/year) |
|---|---|---|---|---|---|---|---|
| CN | 114946133 | A | 26 August 2022 | None | | | |
| WO | 2023123379 | A1 | 06 July 2023 | None | | | |
| WO | 2023111752 | A1 | 22 June 2023 | US | 2023189031 | A1 | 15 June 2023 |
| CN | 115514462 | A | 23 December 2022 | None | | | |
| WO | 2023108594 | A1 | 22 June 2023 | None | | | |

Form PCT/ISA/210 (patent family annex) (July 2022)

**EP 4 746 331 A1**

**Patent documents cited in the description**

- CN 202310868726